(19) **Europäisches Patentamt / European Patent Office / Office européen des brevets**

(11) **EP 4 123 938 A1**

(12) # EUROPEAN PATENT APPLICATION
published in accordance with Art. 153(4) EPC

(43) Date of publication:
**25.01.2023 Bulletin 2023/04**

(21) Application number: **21793181.5**

(22) Date of filing: **22.04.2021**

(51) International Patent Classification (IPC):
***H04L 1/08*** *(2006.01)*

(52) Cooperative Patent Classification (CPC):
**H04L 1/08; H04L 1/16; H04L 1/18; H04L 5/00;
H04L 47/22**

(86) International application number:
**PCT/CN2021/089098**

(87) International publication number:
**WO 2021/213482 (28.10.2021 Gazette 2021/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.04.2020 CN 202010328700**

(71) Applicant: **Huawei Technologies Co., Ltd.
Shenzhen, Guangdong 518129, (CN)**

(72) Inventors:
• **XU, Weiwang**
  **Shenzhen, Guangdong 518129 (CN)**
• **HU, Xinyu**
  **Shenzhen, Guangdong 518129 (CN)**
• **CHENG, Jian**
  **Shenzhen, Guangdong 518129 (CN)**
• **ZHANG, Liang**
  **Shenzhen, Guangdong 518129 (CN)**

(74) Representative: **Körber, Martin Hans
Mitscherlich PartmbB
Patent- und Rechtsanwälte
Sonnenstraße 33
80331 München (DE)**

(54) **RETRANSMISSION TIMEOUT (RTO) DETERMINING METHOD AND RELATED APPARATUS**

(57) Embodiments of this application disclose a retransmission timeout RTO determining method and a related apparatus. The method includes: A transmission device sends, to a network analyzer, a network throughput at which communication is performed through a first communication connection, where the network throughput is used by the network analyzer to determine an RTO corresponding to the first communication connection. The network analyzer obtains a first network throughput at which the transmission device performs communication through the first communication connection. The network analyzer calculates, based on the first network throughput, a first RTO corresponding to the first communication connection. The network analyzer sends the first RTO to the transmission device. The transmission device receives the first RTO sent by the network analyzer. The embodiments of this application help improve efficiency of retransmitting a lost data packet.

FIG. 1A

## Description

This application claims priority to Chinese Patent Application No. 202010328700.9, filed with the China National Intellectual Property Administration on April 23, 2020 and entitled "RETRANSMISSION TIMEOUT DETERMINING METHOD AND RELATED APPARATUS", which is incorporated herein by reference in its entirety.

## TECHNICAL FIELD

This application relates to the field of communications technologies, and in particular, to a retransmission timeout determining method and a related apparatus.

## BACKGROUND

Currently, after a receiving device receives a previous data packet, the receiving device immediately sends an acknowledgment character (Acknowledge character, ACK) corresponding to the previous data packet to a sending device. If a next data packet is lost in a transmission process from the sending device to the receiving device, the sending device receives three repeated ACKs corresponding to the previous data packet. In this case, the sending device determines that the next data packet is lost, and immediately retransmits the next data packet. Alternatively, when a network status is poor, it cannot be ensured that an ACK sent by the receiving device can be received by the sending device. If the sending device keeps waiting for the three repeated ACKs corresponding to the previous data packet, time may be wasted. In this case, the sending device sets a retransmission timeout (Retransmission Timeout, RTO) (which is slightly longer than duration in which the sending device receives the three repeated ACKs corresponding to the previous data packet). If the sending device does not receive, within the specified RTO, the ACK that corresponds to the next data packet and is sent by the receiving device, the sending device immediately retransmits the next data packet. The specified RTO is fixed, which cannot satisfy a real-time transmission status of a data packet. As a result, efficiency of retransmitting a lost data packet is low.

## SUMMARY

Embodiments of this application provide a retransmission timeout RTO determining method and a related apparatus, to improve efficiency of retransmitting a lost data packet.

According to a first aspect, an embodiment of this application provides a retransmission timeout RTO determining method, applied to a network analyzer. The method includes:

The network analyzer obtains a first network throughput at which a transmission device performs communication through a first communication connection.

The network analyzer calculates, based on the first network throughput, a first RTO corresponding to the first communication connection.

The network analyzer sends the first RTO to the transmission device.

It can be learned that a sending device immediately retransmits a next data packet when the sending device does not receive, within a specified RTO, an ACK that corresponds to the next data packet and that is sent by a receiving device. In comparison, in this embodiment of this application, the network analyzer calculates, based on the first network throughput at which the transmission device performs communication through the first communication connection, the first RTO corresponding to the first communication connection, and sends the first RTO to the transmission device, so that the transmission device determines, based on the first RTO, whether several data packets sent by the transmission device are lost, and immediately retransmits a data packet if the data packet is lost. The first RTO is calculated based on a network throughput and can satisfy a real-time transmission status of a data packet. Therefore, this helps improve efficiency of retransmitting a lost data packet.

In some possible embodiments, after the network analyzer sends the first RTO to the transmission device, the method further includes:

The network analyzer receives a round trip time RTT of a first data packet and packet loss information of a second data packet that are sent by the transmission device. Both the first data packet and the second data packet are data packets transmitted by the transmission device through the first communication connection. A time point at which the transmission device transmits the first data packet is earlier than a time point at which the transmission device transmits the second data packet. The second data packet is a lost data packet that is determined based on the first RTO.

The network analyzer determines a packet loss type of the second data packet based on the RTT of the first data packet and the first RTO, where the packet loss type includes congestion-triggered packet loss and random packet loss.

The network analyzer determines a window reduction amplitude of a congestion window of the first communication connection based on the packet loss type of the second data packet.

It can be learned that the sending device immediately retransmits a next data packet when the sending device does not receive, within a specified RTO, an ACK that corresponds to the next data packet and that is sent by the receiving device. In comparison, in this embodiment of this application, the network analyzer first determines the packet loss type of the second data packet based on the RTT of the first data packet and the first RTO, then determines the window reduction amplitude of the congestion window of the first communication connection based on the packet loss type of the second data packet, and further sends the window reduction amplitude of the congestion window of the first communication connection to the transmission device. The transmission device adjusts the congestion window of the first communication connection based on the window reduction amplitude of the congestion window of the first communication connection, and the transmission device retransmits the second data packet by using the congestion window of the transmission device. The first RTO is calculated based on a network throughput and can satisfy a real-time transmission status of a data packet. Therefore, this helps improve efficiency of retransmitting a lost data packet. The adjusted congestion window of the first communication connection can maintain data packet transmission to a maximum extent. Therefore, a network throughput is effectively increased, and network resources are utilized to a maximum extent.

In some possible embodiments, the first data packet and the second data packet are two data packets successively sent by the transmission device through the first communication connection.

It can be learned that, in this example, because the first data packet and the second data packet are two data packets successively sent by the transmission device through the first communication connection, the window reduction amplitude of the congestion window of the first communication connection that is determined based on the RTT of the first data packet and the first RTO is more accurate.

In some possible embodiments, after the network analyzer determines the window reduction amplitude of the congestion window of the first communication connection based on the packet loss type of the second data packet, the method further includes:

The network analyzer sends the window reduction amplitude to the transmission device.

It can be learned that, in this example, the network analyzer sends the window reduction amplitude to the transmission device, so that the transmission device adjusts the congestion window of the first communication connection based on the window reduction amplitude, and the transmission device retransmits the second data packet by using the congestion window of the transmission device. The first RTO is calculated based on a network throughput and can satisfy a real-time transmission status of a data packet. Therefore, this helps improve efficiency of retransmitting a lost data packet. The adjusted congestion window of the first communication connection can maintain data packet transmission to a maximum extent. Therefore, a network throughput is effectively increased, and network resources are utilized to a maximum extent.

In some possible embodiments, that the network analyzer calculates, based on the first network throughput, a first RTO corresponding to the first communication connection includes:

The network analyzer calculates, based on the first network throughput, a second RTO, and a second network throughput, the first RTO corresponding to the first communication connection. The second RTO is a latest RTO calculated by the network analyzer for the first communication connection before the network analyzer calculates the first RTO. The second network throughput is a latest network throughput at which the transmission device performs communication through the first communication connection when the network analyzer calculates the second RTO.

It can be learned that, in this example, the network analyzer calculates, based on the first network throughput, the second RTO, and the second network throughput, the first RTO corresponding to the first communication connection. Because the first RTO is calculated based on the first network throughput, the second RTO, and the second network throughput, a real-time transmission status of a data packet can be satisfied. This helps improve efficiency of retransmitting a lost data packet.

In some possible embodiments, that the network analyzer calculates, based on the first network throughput, a second RTO, and a second network throughput, the first RTO corresponding to the first communication connection includes:

The network analyzer calculates, based on the second RTO and a change of the first network throughput relative to the second network throughput, the first RTO corresponding to the first communication connection.

It can be learned that, in this example, the network analyzer calculates, based on the second RTO and the change of the first network throughput relative to the second network throughput, the first RTO corresponding to the first communication connection. Because the first RTO is calculated based on the second RTO and a change trend of the network throughput, a real-time transmission status of a data packet can be satisfied. This helps improve efficiency of retransmitting a lost data packet.

In some possible embodiments, that the network analyzer calculates, based on the first network throughput, a second RTO, and a second network throughput, the first RTO corresponding to the first communication connection includes:

The network analyzer calculates, based on the second RTO and a change rate of the first network throughput relative to the second network throughput, the first RTO corresponding to the first communication connection.

It can be learned that, in this example, the network analyzer calculates, based on the second RTO and the change rate of the first network throughput relative to the second network throughput, the first RTO corresponding to the first communication connection. Because the first RTO is calculated based on the second RTO and the change rate of the first network throughput relative to the second network throughput, a real-time transmission status of a data packet can be satisfied. This helps improve efficiency of retransmitting a lost data packet. In addition, the first RTO calculated based on the second RTO and the change rate of the first network throughput relative to the second network throughput is more accurate.

In some possible embodiments, the first RTO is an RTO calculated for the first communication connection at the $N^{th}$ time, the second RTO is an RTO calculated for the first communication connection at the $(N-1)^{th}$ time, and that the network analyzer calculates, based on the first network throughput, a second RTO, and a second network throughput, the first RTO corresponding to the first communication connection includes:

The network analyzer calculates, by using a formula for the first retransmission timeout, the first RTO corresponding to the first communication connection.

The formula for the first retransmission timeout is as follows:

$$RTO_n = RTO_{n-1} \times [1 + \alpha \times (Throughput_n - Throughput_{n-1}) / Throughput_{n-1}]$$

$RTO_n$ is the first RTO, $RTO_{n-1}$ is the second RTO, $\alpha$ is a preset RTO coefficient, Throughput. is the first network throughput, and $Throughput_{n-1}$ is the second network throughput.

In some possible embodiments, that the network analyzer determines a packet loss type of the second data packet based on the RTT of the first data packet and the first RTO includes:

The network analyzer calculates a duration difference between the current RTO and the RTT of the first data packet.

If the duration difference is greater than or equal to preset duration, the network analyzer determines that the packet loss type of the second data packet is the congestion-triggered packet loss.

Alternatively, if the duration difference is less than preset duration, the network analyzer determines that the packet loss type of the second data packet is the random packet loss.

It can be learned that, in this example, if the duration difference is large, the network analyzer determines that the packet loss type of the second data packet is the congestion-triggered packet loss. If the duration difference is small, the network analyzer determines that the packet loss type of the second data packet is the random packet loss. Then, the network analyzer determines a window reduction amplitude of a congestion window of the first communication connection based on different packet loss types, and sends the window reduction amplitude of the congestion window of the first communication connection to the transmission device. The transmission device adjusts the congestion window of the first communication connection based on the window reduction amplitude of the congestion window of the first communication connection, and the transmission device retransmits the second data packet by using the congestion window of the transmission device. The first RTO is calculated based on a network throughput. Therefore, this helps improve efficiency of retransmitting a lost data packet. The window reduction amplitude of the congestion window of the first communication connection is determined by the network analyzer based on the different packet loss types, so that the adjusted congestion window of the first communication connection can maintain data packet transmission to a maximum extent. Therefore, a network throughput is effectively increased, and network resources are utilized to a maximum extent.

In some possible embodiments, that the network analyzer determines a window reduction amplitude of a congestion window of the first communication connection based on the packet loss type of the second data packet includes:

If the packet loss type of the second data packet is the congestion-triggered packet loss, the network analyzer determines that the window reduction amplitude of the congestion window of the first communication connection is not zero.

Alternatively, if the packet loss type of the second data packet is the random packet loss, the network analyzer determines that the window reduction amplitude of the congestion window of the first communication connection is zero.

It can be learned that, in this example, if the packet loss type of the second data packet is the congestion-triggered packet loss, the window reduction amplitude of the congestion window of the first communication connection is not zero; or if the packet loss type of the second data packet is the random packet loss, the window reduction amplitude of the congestion window of the first communication connection is zero. Further, the network analyzer sends the window reduction amplitude of the congestion window of the first communication connection to the transmission device, and the transmission device adjusts the congestion window of the first communication connection based on the window reduction amplitude of the congestion window of the first communication connection. In this way, the transmission device properly adjusts the congestion window of the first communication connection, so that the adjusted congestion window of the first communication connection can maintain data packet transmission to a maximum extent. Therefore, a network throughput is effectively increased and network resources are utilized to a maximum extent.

In some possible embodiments, that the network analyzer determines the window reduction amplitude of the congestion window of the first communication connection is not zero includes:

The network analyzer calculates, based on a second window reduction amplitude and a change of a third network throughput relative to a fourth network throughput, a first window reduction amplitude corresponding to the first communication connection. The second window reduction amplitude is a latest window reduction amplitude calculated by the network analyzer for the first communication connection before the network analyzer calculates the first window reduction amplitude. The third network throughput is a latest network throughput at which the transmission device performs communication through the first communication connection when the network analyzer calculates the first window reduction amplitude. The fourth network throughput is a latest network throughput at which the transmission device performs communication through the first communication connection when the network analyzer calculates the second window reduction amplitude.

It can be learned that, in this example, the network analyzer calculates, based on the second window reduction amplitude and the change of the third network throughput relative to the fourth network throughput, the first window reduction amplitude corresponding to the first communication connection. Because the first window reduction amplitude corresponding to the first communication connection is calculated based on the second window reduction amplitude and a change trend of the network throughput, and the congestion window of the first communication connection that is adjusted based on the first window reduction amplitude corresponding to the first communication connection can maintain data packet transmission to a maximum extent. Therefore, the network throughput is effectively increased, and network resources are utilized to a maximum extent.

In some possible embodiments, that the network analyzer determines the window reduction amplitude of the congestion window of the first communication connection is not zero includes:

The network analyzer calculates, based on a second window reduction amplitude and a change rate of a third network throughput relative to a fourth network throughput, a first window reduction amplitude corresponding to the first communication connection. The second window reduction amplitude is a latest window reduction amplitude calculated by the network analyzer for the first communication connection before the network analyzer calculates the first window reduction amplitude. The third network throughput is a latest network throughput at which the transmission device performs communication through the first communication connection when the network analyzer calculates the first window reduction amplitude. The fourth network throughput is a latest network throughput at which the transmission device performs communication through the first communication connection when the network analyzer calculates the second window reduction amplitude.

It can be learned that, in this example, the network analyzer calculates, based on the second window reduction amplitude and the change rate of the third network throughput relative to the fourth network throughput, the first window reduction amplitude corresponding to the first communication connection. Because the first window reduction amplitude corresponding to the first communication connection is calculated based on the second window reduction amplitude and the change rate of the third network throughput relative to the fourth network throughput, and the congestion window of the first communication connection that is adjusted based on the first window reduction amplitude corresponding to the first communication connection can maintain data packet transmission to a maximum extent. Therefore, the network throughput is effectively increased, and network resources are utilized to a maximum extent. In addition, the first window reduction amplitude corresponding to the first communication connection that is calculated based on the second window reduction amplitude and the change rate of the third network throughput relative to the fourth network throughput is more accurate.

In some possible embodiments, the first window reduction amplitude is a window reduction amplitude calculated for the first communication connection at the $M^{th}$ time, the second window reduction amplitude is a window reduction amplitude calculated for the first communication connection at the $(M-1)^{th}$ time, and that the network analyzer calculates, based on the third network throughput, the second window reduction amplitude, and the fourth network throughput, the first window reduction amplitude corresponding to the first communication connection includes:

The network analyzer calculates, by using a formula for the first window reduction amplitude, the first window reduction amplitude corresponding to the first communication connection.

The formula for the first window reduction amplitude is as follows:

$$A_m = A_{m-1} \times [1 + \beta \times (\text{Throughput}_m - \text{Throughput}_{m-1}) / \text{Throughput}_{m-1}]$$

$A_m$ is the first window reduction amplitude, $A_{m-1}$ is the second window reduction amplitude, $\beta$ is a preset window reduction amplitude coefficient, $\text{Throughput}_m$ is the third network throughput, and $\text{Throughput}_{m-1}$ is the fourth network throughput.

In some possible embodiments, the following cases may exist.

If the window reduction amplitude is a window reduction amplitude calculated for the first communication connection at the first time, the window reduction amplitude is calculated by the network analyzer based on a minimum RTT of a transmission link on which the first communication connection is located.

Alternatively, if the window reduction amplitude is a window reduction amplitude calculated for the first communication connection at the second time, the window reduction amplitude is calculated by the network analyzer based on a preset window reduction amplitude coefficient and a window reduction amplitude calculated for the first communication connection at the first time.

Alternatively, if the window reduction amplitude is a window reduction amplitude calculated for the first communication connection at the $M^{th}$ time, the window reduction amplitude is calculated by the network analyzer based on a fifth network throughput, a sixth network throughput, and a window reduction amplitude calculated for the first communication connection at the $(M-1)^{th}$ time, where M is an integer greater than 2. The fifth network throughput is a latest network throughput at which the transmission device performs communication through the first communication connection when the window reduction amplitude is calculated for the first communication connection at the $M^{th}$ time. The sixth network throughput is a latest network throughput at which the transmission device performs communication through the first communication connection when the window reduction amplitude is calculated for the first communication connection at the $(M-1)^{th}$ time.

It can be learned that, in this example, different window reduction amplitude calculation manners are used for window reduction amplitudes calculated for the first communication connection at the different times, and then the window reduction amplitude of the congestion window of the first communication connection is sent to the transmission device. The transmission device adjusts the congestion window of the first communication connection based on the window reduction amplitude of the congestion window of the first communication connection, and the transmission device retransmits the second data packet by using the congestion window of the transmission device. The adjusted congestion window of the first communication connection can maintain data packet transmission to a maximum extent. Therefore, a network throughput is effectively increased, and network resources are utilized to a maximum extent.

In some possible embodiments, the method further includes:
The network analyzer sends a network throughput request to the transmission device, where the network throughput request is used to indicate the transmission device to report a network throughput to the network analyzer according to a preset learning period length.

It can be learned that, in this example, the network analyzer sends the network throughput request to the transmission device, so that the transmission device reports the network throughput to the network analyzer according to the preset learning period length. The first RTO is calculated based on the network throughput periodically reported by the transmission device to the network analyzer, and can satisfy a real-time transmission status of a data packet. Therefore, this helps improve efficiency of retransmitting a lost data packet.

According to a second aspect, an embodiment of this application provides a retransmission timeout RTO determining method, applied to a transmission device. The method includes:
The transmission device sends, to a network analyzer, a network throughput at which communication is performed through a first communication connection, where the network throughput is used by the network analyzer to determine an RTO corresponding to the first communication connection.

The transmission device receives the RTO sent by the network analyzer.

It can be learned that a sending device immediately retransmits a next data packet when the sending device does not receive, within a specified RTO, an ACK that corresponds to the next data packet and that is sent by a receiving device. In comparison, in this embodiment of this application, the transmission device first sends, to the network analyzer, the network throughput at which the communication is performed through the first communication connection, then the transmission device receives the RTO sent by the network analyzer, and the transmission device further determines, based on the RTO, whether several data packets sent by the transmission device are lost, and immediately retransmits a data packet if the data packet is lost. The first RTO is calculated based on a network throughput and can satisfy a real-time transmission status of a data packet. Therefore, this helps improve efficiency of retransmitting a lost data packet. In addition, if the last data packet is lost in a transmission process from the sending device to the receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

In some possible embodiments, the method further includes:
The transmission device determines, based on the RTO, that a second data packet transmitted through the first communication connection is lost.

The transmission device sends a round trip time RTT of a first data packet and packet loss information of the second data packet to the network analyzer. Both the first data packet and the second data packet are data packets transmitted by the transmission device through the first communication connection. A time point at which the transmission device transmits the first data packet is earlier than a time point at which the transmission device transmits the second data packet. The RTT and the packet loss information are used by the network analyzer to determine a window reduction amplitude of a congestion window of the first communication connection.

It can be learned that the sending device immediately retransmits a next data packet when the sending device does not receive, within a specified RTO, an ACK that corresponds to the next data packet and that is sent by the receiving device. In comparison, in this embodiment of this application, the transmission device first determines, based on the RTO, the second data packet transmitted through the first communication connection is lost, then the transmission device sends the round trip time RTT of the first data packet and the packet loss information of the second data packet to the network analyzer, and the transmission device further receives the window reduction amplitude that is of a congestion window of the first communication connection and that is sent by the network analyzer. The transmission device adjusts the congestion window of the first communication connection based on the window reduction amplitude of the congestion window of the first communication connection, and the transmission device retransmits the second data packet by using the congestion window of the transmission device. The first RTO is calculated based on a network throughput and can satisfy a real-time transmission status of a data packet. Therefore, this helps improve efficiency of retransmitting a lost data packet. In addition, if the last data packet is lost in a transmission process from the sending device to the receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

In some possible embodiments, the method further includes:
The transmission device receives the window reduction amplitude sent by the network analyzer.

The transmission device adjusts the congestion window of the first communication connection based on the window reduction amplitude.

It can be learned that, in this example, the transmission device receives the window reduction amplitude sent by the network analyzer, then the transmission device adjusts the congestion window of the first communication connection based on the window reduction amplitude, and the transmission device retransmits the second data packet by using the congestion window of the transmission device. The first RTO is calculated based on a network throughput and can satisfy a real-time transmission status of a data packet. Therefore, this helps improve efficiency of retransmitting a lost data packet. The adjusted congestion window of the first communication connection can maintain data packet transmission to a maximum extent. Therefore, a network throughput is effectively increased, and network resources are utilized to a maximum extent. In addition, if the last data packet is lost in a transmission process from the sending device to the receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

In some possible embodiments, after the transmission device sends the round trip time RTT of the first data packet and the packet loss information of the second data packet to the network analyzer, the method further includes:
The transmission device retransmits the second data packet by using the congestion window of the transmission device.

In some possible embodiments, the method further includes:
The transmission device receives a network throughput request sent by the network analyzer, where the network throughput request is used to indicate the transmission device to report a network throughput to the network analyzer according to a preset learning period length.

It can be learned that, in this example, the transmission device receives the network throughput request sent by the network analyzer, so that the transmission device reports the network throughput to the network analyzer according to the preset learning period length. The first RTO is calculated based on the network throughput periodically reported by the transmission device to the network analyzer, and can satisfy a real-time transmission status of a data packet. Therefore, this helps improve efficiency of retransmitting a lost data packet. The adjusted congestion window of the first communication connection can maintain data packet transmission to a maximum extent. Therefore, a network throughput is effectively increased, and network resources are utilized to a maximum extent. In addition, if the last data packet is lost in a transmission process from the sending device to the receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

According to a third aspect, an embodiment of this application provides a retransmission timeout RTO determining apparatus, applied to a network analyzer. The apparatus includes:

an obtaining unit, configured to obtain a first network throughput at which a transmission device performs communication through a first communication connection;

a calculation unit, configured to calculate, based on the first network throughput, a first RTO corresponding to the first communication connection; and

a first sending unit, configured to send the first RTO to the transmission device.

According to a fourth aspect, an embodiment of this application provides a retransmission timeout RTO determining apparatus, applied to a transmission device. The apparatus includes:

a second sending unit, configured to send, to a network analyzer, a network throughput at which communication is performed through a first communication connection, where the network throughput is used by the network analyzer to determine an RTO corresponding to the first communication connection; and

a second receiving unit, configured to receive the RTO sent by the network analyzer.

According to a fifth aspect, an embodiment of this application provides a retransmission timeout RTO determining apparatus, where the apparatus includes a processor, a communications interface, and a memory that are coupled to each other.

The processor is configured to obtain a first network throughput at which a transmission device performs communication through a first communication connection.

The processor is further configured to calculate, based on the first network throughput, a first RTO corresponding to the first communication connection.

The communications interface is configured to send the first RTO to the transmission device.

According to a sixth aspect, an embodiment of this application provides a retransmission timeout RTO determining apparatus, where the apparatus includes a processor, a communications interface, and a memory that are coupled to each other.

The communications interface is configured to send, to a network analyzer, a network throughput at which communication is performed through a first communication connection, where the network throughput is used by the network analyzer to determine an RTO corresponding to the first communication connection.

The communications interface is further configured to receive the RTO sent by the network analyzer.

According to a seventh aspect, this application provides a computer-readable storage medium that stores computer instructions. A computer program is executed by hardware (for example, a processor), to implement some or all steps of any method that is performed by a retransmission timeout RTO determining apparatus and that is provided in embodiments of this application.

According to an eighth aspect, an embodiment of this application provides a computer program product. When the computer program product runs on a computer, the computer is enabled to perform some or all steps of the retransmission timeout RTO determining method in the foregoing aspects.

According to a ninth aspect, an embodiment of this application provides a chip system. The chip system includes a processor, configured to support an electronic device in implementing some or all steps of the retransmission timeout RTO determining method in the foregoing aspects.

## BRIEF DESCRIPTION OF DRAWINGS

To describe the technical solutions in embodiments of this application or in the background more clearly, the following briefly describes the accompanying drawings for describing embodiments of this application or the background.

FIG. 1A is a schematic flowchart of a retransmission timeout RTO determining method according to an embodiment of this application;

FIG. 1B is a schematic flowchart of a first method for retransmitting a lost data packet according to an embodiment of this application;

FIG. 1C-1 and FIG. 1C-2 are a schematic flowchart of a second method for retransmitting a lost data packet according to an embodiment of this application;

FIG. 1D is a schematic diagram of a structure of a network analyzer according to an embodiment of this application;

FIG. 1E is a schematic diagram of a structure of a transmission device according to an embodiment of this application;

FIG. 2 is a composition block diagram of function units of a retransmission timeout RTO determining apparatus according to an embodiment of this application;

FIG. 3 is a composition block diagram of function units of another retransmission timeout RTO determining apparatus according to an embodiment of this application;

FIG. 4 is a schematic diagram of a structure of a retransmission timeout RTO determining apparatus according to an embodiment of this application;

FIG. 5 is a schematic diagram of a structure of another retransmission timeout RTO determining apparatus according to an embodiment of this application; and

FIG. 6 is a schematic diagram of a structure of a chip system according to an embodiment of this application.

## DESCRIPTION OF EMBODIMENTS

The following describes embodiments of this application with reference to the accompanying drawings in embodiments of this application. Terms used in implementations of embodiments of this application are merely used to explain specific embodiments of this application, and are not intended to limit this application.

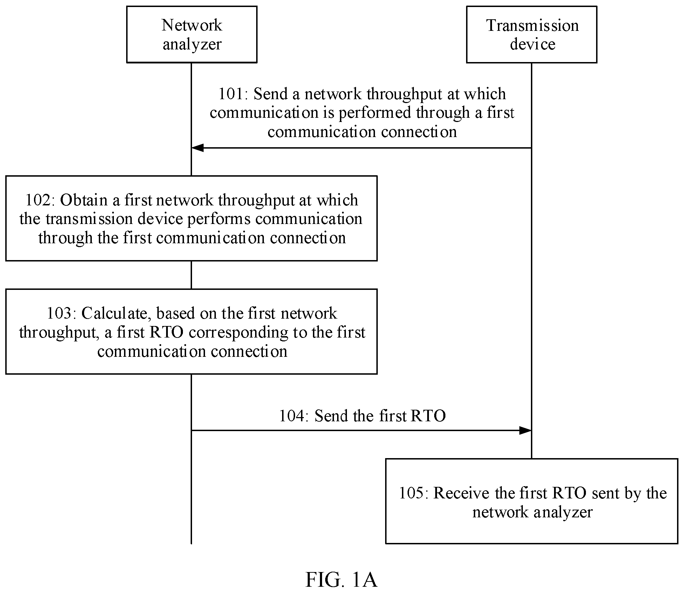

FIG. 1A is a schematic flowchart of a retransmission timeout RTO determining method according to an embodiment of this application. The retransmission timeout RTO determining method is applied to a network analyzer and a transmission device. The retransmission timeout RTO determining method includes steps 101 to 105. Details are as follows:

101: The transmission device sends, to the network analyzer, a network throughput at which communication is performed through a first communication connection, where the network throughput is used by the network analyzer to determine an RTO corresponding to the first communication connection.

The transmission device may include a wireless access point (Access Point, AP), an application router (Applied Router, AR), and the like.

The wireless access point is also referred to as a "hotspot", and mainly includes an integrated device for route switching and access and a pure access point device. The integrated device for route switching and access performs access and routing, and the pure access point device is responsible for only access of a wireless client. The pure access point device is usually used for wireless network expansion and is connected to another wireless access point or a primary wireless access point, to enlarge a wireless coverage area. The integrated device for route switching and access is usually a core of a wireless network.

The application router is a hardware device that connects two or more networks, functions as a gateway between the networks, and is a dedicated intelligent network device that reads an address in each data packet and determines how to transmit the data packet. The application router can understand different protocols, such as an Ethernet protocol used by a local area network and a TCP/IP protocol for the Internet. In this way, the router may analyze destination addresses of data packets transmitted from different types of networks, convert addresses of non-TCP/IP networks into TCP/IP addresses, or convert TCP/IP addresses into addresses of non-TCP/IP networks, and then transmit the data packets to a specified location based on a selected routing algorithm. Therefore, the router can connect the non-TCP/IP networks to the Internet.

The network analyzer is a hardware or software device that can detect and rectify various fault features. These features include decoding of a special protocol packet, special fault testing before programming, packet filtering, and packet transmission. The network analyzer is installed on a network to protect the entire network from malicious activities. The network analyzer may be used to enhance firewalls and antivirus software, and detect spyware.

The first communication connection may be a transmission control protocol (Transmission Control Protocol, TCP) connection, a stream control transmission protocol (Stream Control Transmission Protocol, SCTP) connection, or the like.

Data in a network is composed of data packets. The firewall consumes resources to process each data packet.

102: The network analyzer obtains a first network throughput at which the transmission device performs communication through the first communication connection.

103: The network analyzer calculates, based on the first network throughput, a first RTO corresponding to the first communication connection.

In some possible embodiments, that the network analyzer calculates, based on the first network throughput, a first RTO corresponding to the first communication connection includes:

The network analyzer calculates, based on the first network throughput, a second RTO, and a second network throughput, the first RTO corresponding to the first communication connection. The second RTO is a latest RTO calculated by the network analyzer for the first communication connection before the network analyzer calculates the first RTO. The second network throughput is a latest network throughput at which the transmission device performs communication through the first communication connection when the network analyzer calculates the second RTO.

It can be learned that, in this example, the network analyzer calculates, based on the first network throughput, the second RTO, and the second network throughput, the first RTO corresponding to the first communication connection. Because the first RTO is calculated based on the first network throughput, the second RTO, and the second network throughput, a real-time transmission status of a data packet can be satisfied. This helps improve efficiency of retransmitting a lost data packet.

In some possible embodiments, that the network analyzer calculates, based on the first network throughput, a second RTO, and a second network throughput, the first RTO corresponding to the first communication connection includes:

The network analyzer calculates, based on the second RTO and a change of the first network throughput relative to the second network throughput, the first RTO corresponding to the first communication connection.

If the change of the first network throughput relative to the second network throughput is an increase, and a change of the second RTO relative to a previous RTO that corresponds to the first communication connection and that is adjacent to the second RTO is an increase, a change of the first RTO that corresponds to the first communication connection and that is relative to the second RTO is an increase.

If the change of the first network throughput relative to the second network throughput is an increase, and a change of the second RTO relative to a previous RTO that corresponds to the first communication connection and that is adjacent to the second RTO is a decrease, a change of the second RTO that corresponds to the first communication connection and that is relative to the second RTO is a decrease.

If the change of the first network throughput relative to the second network throughput is a decrease, and a change of the second RTO relative to a previous RTO that corresponds to the first communication connection and that is adjacent to the second RTO is an increase, a change of the first RTO that corresponds to the first communication connection and that is relative to the second RTO is a decrease.

If the change of the first network throughput relative to the second network throughput is a decrease, and a change of the second RTO relative to a previous RTO that corresponds to the first communication connection and that is adjacent to the second RTO is a decrease, a change of the first RTO that corresponds to the first communication connection and that is relative to the second RTO is an increase.

It can be learned that, in this example, the network analyzer calculates, based on the second RTO and the change of the first network throughput relative to the second network throughput, the first RTO corresponding to the first communication connection. Because the first RTO is calculated based on the second RTO and a change trend of the network throughput, a real-time transmission status of a data packet can be satisfied. This helps improve efficiency of retransmitting a lost data packet.

In some possible embodiments, that the network analyzer calculates, based on the first network throughput, a second RTO, and a second network throughput, the first RTO corresponding to the first communication connection includes:

The network analyzer calculates, based on the second RTO and a change rate of the first network throughput relative to the second network throughput, the first RTO corresponding to the first communication connection.

It can be learned that, in this example, the network analyzer calculates, based on the second RTO and the change rate of the first network throughput relative to the second network throughput, the first RTO corresponding to the first communication connection. Because the first RTO is calculated based on the second RTO and the change rate of the first network throughput relative to the second network throughput, a real-time transmission status of a data packet can be satisfied. This helps improve efficiency of retransmitting a lost data packet. In addition, the first RTO calculated based on the second RTO and the change rate of the first network throughput relative to the second network throughput is more accurate.

In some possible embodiments, when calculating the RTO at the $N^{th}$ time (N is an integer greater than or equal to 2), the network analyzer may specifically calculate the RTO by using a formula for the first retransmission timeout.

The formula for the first retransmission timeout is as follows:

$$RTO_n = RTO_{n-1} \times [1 + \alpha \times (Throughput_n - Throughput_{n-1})/Throughput_{n-1}]$$

$RTO_n$ is an RTO (for example, the first RTO) calculated for the first communication connection at the $N^{th}$ time, $RTO_{n-1}$ is an RTO (for example, the second RTO) calculated for the first communication connection at the $(N-1)^{th}$ time, $\alpha$ is a preset RTO coefficient, $Throughput_n$ is a latest network throughput (for example, the first network throughput) at which the transmission device performs communication through the first communication connection when the RTO is calculated for the first communication connection at the $N^{th}$ time, and $Throughput_{n-1}$ is a latest network throughput (for example, the second network throughput) at which the transmission device performs communication through the first communication connection when the RTO is calculated for the first communication connection at the $(N-1)^{th}$ time.

$\alpha$ may be preset. In other words, a professional may manually set $\alpha$ based on historical measurement data, and a value range of $\alpha$ may be from -0.5 to 0.5.

Herein, an objective of introducing $[(Throughput_n - Throughput_{n-1})/Throughput_{n-1}]$ to refine $\alpha$ lies in: when the network throughput changes greatly, an action amplitude of changing the RTO may be larger; and when the network throughput changes slightly, an action amplitude of changing the RTO may be smaller, so that a convergence value can be quickly reached. Reinforcement learning may change a time period for updating the RTO. When the network throughput changes greatly, an iteration period is short. When the network throughput changes slightly, an iteration period is long. In this way, a network change can be quickly adapted to, and computing overheads can be reduced when a network status is stable.

In some possible embodiments, the following cases may exist.

If the first RTO is an RTO calculated for the first communication connection at the first time, the first RTO is calculated by the network analyzer based on a minimum RTT of a transmission link on which the first communication connection is located.

Alternatively, if the first RTO is an RTO calculated for the first communication connection at the second time, the first RTO is calculated by the network analyzer based on a preset RTO coefficient and the RTO calculated for the first communication connection at the first time.

Alternatively, if the first RTO is an RTO calculated for the first communication connection at the $N^{th}$ time, the first RTO is calculated by the network analyzer based on a seventh network throughput, an eighth network throughput, and an RTO calculated for the first communication connection at the $(N-1)^{th}$ time, where N is an integer greater than 1. The seventh network throughput is a latest network throughput at which the transmission device performs communication through the first communication connection when the RTO is calculated for the first communication connection at the $N^{th}$ time. The eighth network throughput is a latest network throughput at which the transmission device performs communication through the first communication connection when the RTO is calculated for the first communication connection at the $(N-1)^{th}$ time.

An English full name of RTT is Round Trip Time. RTT indicates a total time period elapsing from a time point when a sending device (for example, the transmission device) sends a data packet to a time point when the sending device receives an ACK from a receiving device (that is, the receiving device immediately sends the ACK corresponding to the data packet after the receiving device receives the data packet).

The network analyzer determines that a sum of specified duration and the minimum RTT of the transmission link on which the first communication connection is located is the RTO calculated for the first communication connection at the first time. The specified duration may be preset. In other words, a professional may manually set the specified duration based on historical measurement data, and a value range of the specified duration may be from 0 to a half of the minimum RTT of the transmission link on which the first communication connection is located.

The network analyzer calculates, by using a formula for the second retransmission timeout, the RTO calculated for the first communication connection at the second time.

The formula for the second retransmission timeout is as follows:

$$RTO_2 = RTO_1 \times (1 + \alpha)$$

$RTO_2$ is the RTO calculated for the first communication connection at the second time, $RTO_1$ is the RTO calculated for the first communication connection at the first time, $\alpha$ is a preset RTO coefficient, and $\alpha$ may be preset. In other words, a professional may manually set $\alpha$ based on historical measurement data, and a value range of $\alpha$ may be from -0.5 to 0.5.

For that the network analyzer calculates, based on the seventh network throughput, the eighth network throughput, and the RTO calculated for the first communication connection at the $(N-1)^{th}$ time, the RTO calculated for the first communication connection at the $N^{th}$ time, refer to that the network analyzer calculates, based on the second RTO and the change rate of the first network throughput relative to the second network throughput, the first RTO corresponding to the first communication connection. Details are not described herein again.

It can be learned that, in this example, the first RTO is obtained by the network analyzer through semiprediction, and the first RTO can be obtained without calculation by the transmission device. This helps reduce deployment costs of the transmission device.

104: The network analyzer sends the first RTO to the transmission device.

105: The transmission device receives the first RTO sent by the network analyzer.

It can be learned that the sending device immediately retransmits a next data packet when the sending device does not receive, within a specified RTO, an ACK that corresponds to the next data packet and that is sent by the receiving device. In comparison, in this embodiment of this application, the network analyzer calculates, based on the first network throughput at which the transmission device performs communication through the first communication connection, the first RTO corresponding to the first communication connection, and sends the first RTO to the transmission device, so that the transmission device determines, based on the first RTO, whether several data packets sent by the transmission device are lost, and immediately retransmits a data packet if the data packet is lost. The first RTO is calculated based on a network throughput and can satisfy a real-time transmission status of a data packet. Therefore, this helps improve efficiency of retransmitting a lost data packet. In addition, if the last data packet is lost in a transmission process from the sending device to the receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

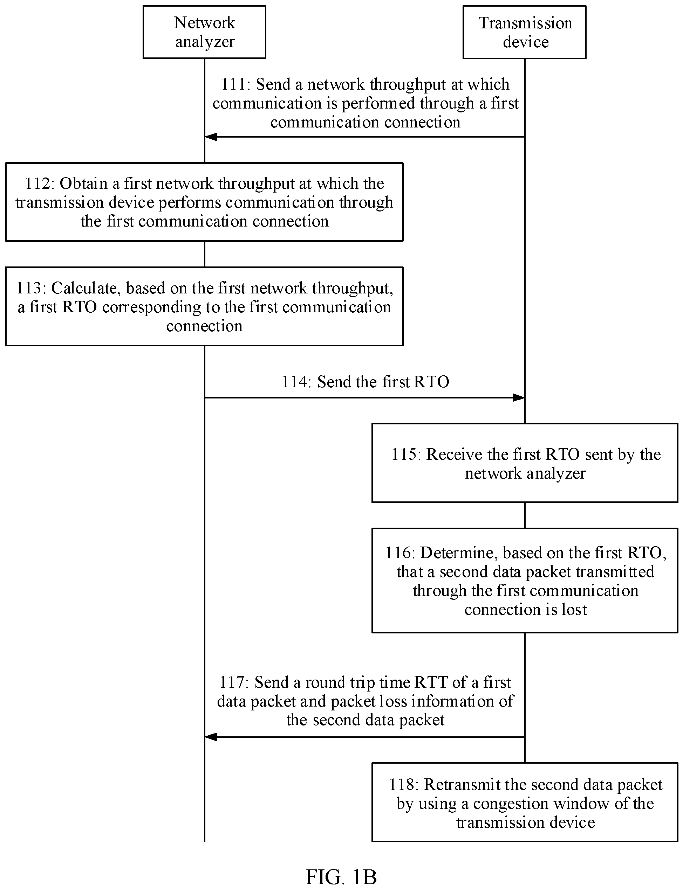

FIG. 1B is a schematic flowchart of a first method for retransmitting a lost data packet according to an embodiment of this application. The method for retransmitting a lost data packet is applied to a network analyzer and a transmission device. The method for retransmitting a lost data packet includes steps 111 to 118. Details are as follows:

111: The transmission device sends, to the network analyzer, a network throughput at which communication is performed through a first communication connection, where the network throughput is used by the network analyzer to determine an RTO corresponding to the first communication connection.

For step 111, refer to the description of step 101, and details are not described herein again.

112: The network analyzer obtains a first network throughput at which the transmission device performs communication through the first communication connection.

113: The network analyzer calculates, based on the first network throughput, a first RTO corresponding to the first communication connection.

For step 103, refer to the description of step 103, and details are not described herein again.

114: The network analyzer sends the first RTO to the transmission device.

115: The transmission device receives the first RTO sent by the network analyzer.

116. The transmission device determines, based on the first RTO, that a second data packet transmitted through the first communication connection is lost.

Starting from that the transmission device transmits the second data packet through the first communication connection, if the transmission device does not receive, within the first RTO, an ACK that corresponds to the second data packet and that is sent by a receiving device, the transmission device determines that the second data packet transmitted through the first communication connection is lost, and sends an RTT of a first data packet and packet loss information of the second data packet to the network analyzer.

117: The transmission device sends the round trip time RTT of the first data packet and the packet loss information of the second data packet to the network analyzer. Both the first data packet and the second data packet are data packets transmitted by the transmission device through the first communication connection. A time point at which the transmission device transmits the first data packet is earlier than a time point at which the transmission device transmits the second data packet. The RTT and the packet loss information are used by the network analyzer to determine a window reduction amplitude of a congestion window of the first communication connection.

The RTT of the first data packet indicates a total time period elapsing from a time point when the transmission device transmits the first data packet through the first communication connection to a time point when the transmission device receives an ACK that corresponds to the first data packet and that is sent by the receiving device.

The packet loss information of the second data packet may be that the second data packet is lost in a transmission process from the transmission device to the receiving device.

If a data packet is sent from a device A, passes through a device B and a device C successively, and arrives at a device D, the transmission device may be any one of the device A, the device B, and the device C, that is, any device other than the destination device on the first communication connection. If the transmission device is the device B, the device B forwards the data packet to data C. If the transmission device is the device C, the device C forwards the data packet to the device D. The RTT of the first data packet indicates a total time period elapsing from a time point when the transmission device sends the first data packet to a time point when the transmission device receives an ACK from the device D (that is, the device D immediately sends the ACK corresponding to the first data packet after the device D receives the first data packet).

In some possible embodiments, the first data packet and the second data packet are two data packets successively sent by the transmission device through the first communication connection.

It can be learned that, in this example, because the first data packet and the second data packet are two data packets successively sent by the transmission device through the first communication connection, the window reduction amplitude of the congestion window of the first communication connection that is determined based on the RTT of the first data packet and the first RTO is more accurate.

118: The transmission device retransmits the second data packet by using the congestion window of the transmission device.

It can be learned that a sending device immediately retransmits a next data packet when the sending device does not receive, within a specified RTO, an ACK that corresponds to the next data packet and that is sent by the receiving device. In comparison, in this embodiment of this application, the network analyzer calculates, based on the first network throughput at which the transmission device performs communication through the first communication connection, the first RTO corresponding to the first communication connection, and sends the first RTO to the transmission device. The transmission device determines, based on the first RTO, that the second data packet transmitted through the first communication connection is lost. The transmission device sends the round trip time RTT of the first data packet and the packet loss information of the second data packet to the network analyzer. The transmission device retransmits the second data packet by using the congestion window of the transmission device. The first RTO is calculated based on a network throughput and can satisfy a real-time transmission status of a data packet. Therefore, this helps improve efficiency of retransmitting a lost data packet. In addition, if the last data packet is lost in a transmission process from the sending device to the receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

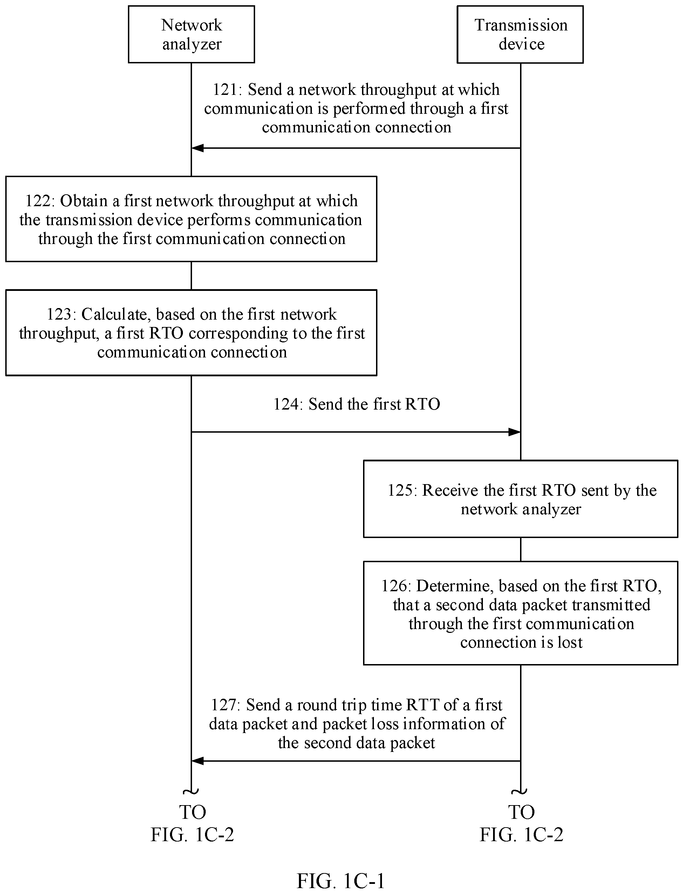

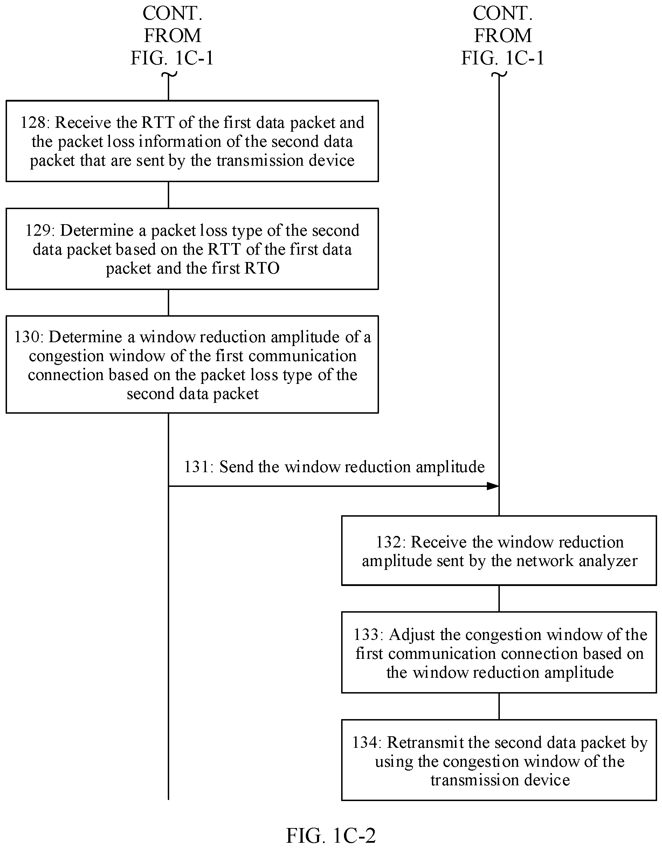

FIG. 1C-1 and FIG. 1C-2 are a schematic flowchart of a second method for retransmitting a lost data packet according to an embodiment of this application. The method for retransmitting a lost data packet is applied to a network analyzer and a transmission device. The method for retransmitting a lost data packet includes steps 121 to 134. Details are as follows:

121: The transmission device sends, to the network analyzer, a network throughput at which communication is performed through a first communication connection, where the network throughput is used by the network analyzer to determine an RTO corresponding to the first communication connection.

For step 121, refer to the description of step 101, and details are not described herein again.

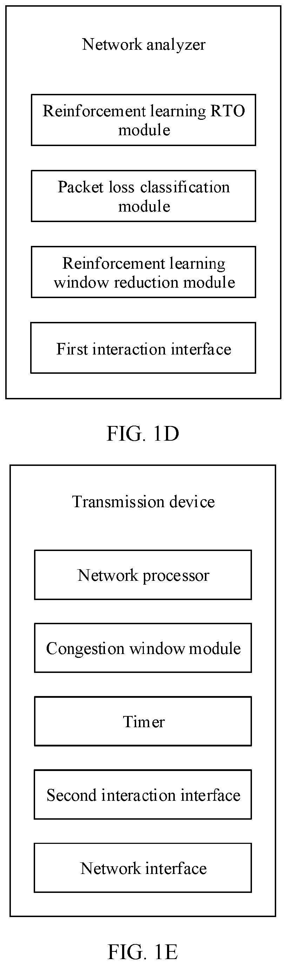

For example, as shown in FIG. 1D, FIG. 1D is a schematic diagram of a structure of a network analyzer according to an embodiment of this application. The network analyzer has a reinforcement learning RTO module, a packet loss classification module, a reinforcement learning window reduction module, and a first interaction interface.

For example, as shown in FIG. 1E, FIG. 1E is a schematic diagram of a structure of a transmission device according to an embodiment of this application. The transmission device has a network processor, a congestion window module, a timer, a second interaction interface, and a network interface.

The network processor is a programmable device, and is specifically applied to various tasks in the communications field, for example, packet processing, protocol analysis, route search, voice/data aggregation, firewalls, and quality of service (Quality of Service, QoS).

The network throughput at which the communication is performed through the first communication connection may be obtained by using the network interface of the transmission device.

The network throughput at which the communication is performed through the first communication connection may be sent to the network analyzer by using the second interaction interface of the transmission device.

122: The network analyzer obtains a first network throughput at which the transmission device performs communication through the first communication connection.

The first network throughput at which the transmission device performs the communication through the first communication connection may be obtained by using the first interaction interface of the network analyzer.

123: The network analyzer calculates, based on the first network throughput, a first RTO corresponding to the first communication connection.

For step 123, refer to the description of step 103, and details are not described herein again.

The first RTO corresponding to the first communication connection may be calculated by using the reinforcement learning RTO module of the network analyzer.

Optionally, when the transmission device reports the network throughput to the network analyzer according to a preset learning period length, if a window reduction amplitude is an RTO calculated for the first communication connection at the $N^{th}$ time, the first RTO is calculated by the network analyzer based on a ninth network throughput, a tenth network throughput, and an RTO calculated for the first communication connection at the $(N-1)^{th}$ time, where N is an integer greater than 2. The ninth network throughput is a latest network throughput that is reported by the transmission device in a learning period corresponding to the RTO calculated for the first communication connection at the $N^{th}$ time, and at which the transmission device performs communication through the first communication connection when the RTO is calculated for the first communication connection at the $N^{th}$ time. The tenth network throughput is a latest network throughput that is reported by the transmission device in a learning period corresponding to the RTO calculated for the first communication connection at the $(N-1)^{th}$ time, and at which the transmission device performs communication through the first communication connection when the RTO is calculated for the first communication connection at the $(N-1)^{th}$ time.

124: The network analyzer sends the first RTO to the transmission device.

The first RTO may be sent to the transmission device by using the first interaction interface of the network analyzer.

In some possible embodiments, the method further includes:

The network analyzer sends a network throughput request to the transmission device, where the network throughput request is used to indicate the transmission device to report a network throughput to the network analyzer according to a preset learning period length.

The network throughput request may be sent to the transmission device by using the first interaction interface of the network analyzer, and the network throughput may be reported to the network analyzer by using the second interaction interface of the transmission device.

A moment at which the network analyzer sends the network throughput request to the transmission device may be in a process in which the network analyzer sends, to the transmission device, an RTO calculated for the first communication connection at the first time.

The preset learning period length may be preset. In other words, a professional may manually set the preset learning period length based on historical measurement data, and a value range of the preset learning period length may be from 0s to 2s.

That the transmission device reports the network throughput to the network analyzer according to the preset learning period length indicates that the transmission device reports the network throughput to the network analyzer once every duration of the preset learning period length.

It can be learned that, in this example, the network analyzer sends the network throughput request to the transmission device which then reports the network throughput to the network analyzer according to the preset learning period length. The first RTO is calculated based on the network throughput periodically reported by the transmission device to the network analyzer, and can satisfy a real-time transmission status of a data packet. Therefore, this helps improve efficiency of retransmitting a lost data packet. In addition, if the last data packet is lost in a transmission process from a sending device to a receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

125: The transmission device receives the first RTO sent by the network analyzer.

The first RTO sent by the network analyzer may be received by using the second interaction interface of the transmission device.

126: The transmission device determines, based on the first RTO, that a second data packet transmitted through the first communication connection is lost.

For step 126, refer to the description of step 116, and details are not described herein again.

That the second data packet transmitted through the first communication connection is lost may be determined based on the first RTO by using the timer of the transmission device.

127: The transmission device sends a round trip time RTT of a first data packet and packet loss information of the second data packet to the network analyzer. Both the first data packet and the second data packet are data packets transmitted by the transmission device through the first communication connection. A time point at which the transmission device transmits the first data packet is earlier than a time point at which the transmission device transmits the second data packet. The RTT and the packet loss information are used by the network analyzer to determine a window reduction amplitude of a congestion window of the first communication connection.

For step 127, refer to the description of step 117, and details are not described herein again.

The RTT of the first data packet and the packet loss information of the second data packet may be sent to the network analyzer by using the second interaction interface of the transmission device.

In some possible embodiments, the first data packet and the second data packet are two data packets successively sent by the transmission device through the first communication connection.

For step 124, refer to the description of step 114, and details are not described herein again.

128: The network analyzer receives the RTT of the first data packet and the packet loss information of the second data packet that are sent by the transmission device.

The RTT of the first data packet and the packet loss information of the second data packet that are sent by the transmission device may be received by using the first interaction interface of the network analyzer.

129: The network analyzer determines a packet loss type of the second data packet based on the RTT of the first data packet and the first RTO, where the packet loss type includes congestion-triggered packet loss and random packet loss.

The packet loss type of the second data packet may be determined based on the RTT of the first data packet and the first RTO by using the packet loss classification module of the network analyzer.

The congestion-triggered packet loss is data packet loss caused by an excessively heavy load, an excessively long queue, and the like of the transmission device. The random packet loss is data packet loss caused by a transmission link problem, radio transmission loss, and the like in a transmission process from the sending device to the receiving device.

In some possible embodiments, that the network analyzer determines a packet loss type of the second data packet based on the RTT of the first data packet and the first RTO includes:

The network analyzer calculates a duration difference between the first RTO and the RTT of the first data packet.

If the duration difference is greater than or equal to preset duration, the network analyzer determines that the packet loss type of the second data packet is the congestion-triggered packet loss.

Alternatively, if the duration difference is less than preset duration, the network analyzer determines that the packet loss type of the second data packet is the random packet loss.

The preset duration may be preset. In other words, a professional may manually set the preset duration based on historical measurement data. A value range of the preset duration is from a quarter of a minimum RTT of a transmission link on which the first communication connection is located to a half of the minimum RTT of the transmission link on which the first communication connection is located.

It can be learned that, in this example, if the duration difference is large, the network analyzer determines that the packet loss type of the second data packet is the congestion-triggered packet loss. If the duration difference is small, the network analyzer determines that the packet loss type of the second data packet is the random packet loss. Then, the network analyzer determines a window reduction amplitude of a congestion window of the first communication connection based on different packet loss types, and sends the window reduction amplitude of the congestion window of the first communication connection to the transmission device. The transmission device adjusts the congestion window of the first communication connection based on the window reduction amplitude of the congestion window of the first communication connection, and the transmission device retransmits the second data packet by using the congestion window of the transmission device. The first RTO is calculated based on a network throughput. Therefore, this helps improve efficiency of retransmitting a lost data packet. The window reduction amplitude of the congestion window of the first communication connection is determined by the network analyzer based on the different packet loss types, so that the adjusted congestion window of the first communication connection can maintain data packet transmission to a maximum extent. Therefore, a network throughput is effectively increased, and network resources are utilized to a maximum extent. In addition, if the last data packet is lost in a transmission process from the sending device to the receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

130: The network analyzer determines the packet loss type of the second data packet based on the RTT of the first data packet and the first RTO.

The window reduction amplitude of the congestion window of the first communication connection may be determined based on the packet loss type of the second data packet by using the reinforcement learning window reduction module of the network analyzer.

It can be learned that the sending device immediately retransmits a next data packet when the sending device does not receive, within a specified RTO, an ACK that corresponds to the next data packet and that is sent by the receiving device. In comparison, in this embodiment of this application, the network analyzer first determines the packet loss type of the second data packet based on the RTT of the first data packet and the first RTO, then determines the window reduction amplitude of the congestion window of the first communication connection based on the packet loss type of the second data packet, and further sends the window reduction amplitude of the congestion window of the first communication connection to the transmission device. The transmission device adjusts the congestion window of the first communication connection based on the window reduction amplitude of the congestion window of the first communication connection, and the transmission device retransmits the second data packet by using the congestion window of the transmission device. The first RTO is calculated based on a network throughput and can satisfy a real-time transmission status of a data packet. Therefore, this helps improve efficiency of retransmitting a lost data packet. The adjusted congestion window of the first communication connection can maintain data packet transmission to a maximum extent. Therefore, a network throughput is effectively increased, and network resources are utilized to a maximum extent.

In some possible embodiments, that the network analyzer determines the window reduction amplitude of the congestion window of the first communication connection based on the packet loss type of the second data packet includes:

If the packet loss type of the second data packet is the congestion-triggered packet loss, the network analyzer determines that the window reduction amplitude of the congestion window of the first communication connection is not zero.

Alternatively, if the packet loss type of the second data packet is the random packet loss, the network analyzer determines that the window reduction amplitude of the congestion window of the first communication connection is zero.

It can be learned that, in this example, if the packet loss type of the second data packet is the congestion-triggered packet loss, the window reduction amplitude of the congestion window of the first communication connection is not zero; or if the packet loss type of the second data packet is the random packet loss, the window reduction amplitude of the congestion window of the first communication connection is zero. Further, the network analyzer sends the window reduction amplitude of the congestion window of the first communication connection to the transmission device, and the transmission device adjusts the congestion window of the first communication connection based on the window reduction amplitude of the congestion window of the first communication connection. In this way, the transmission device properly adjusts the congestion window of the first communication connection, so that the adjusted congestion window of the first communication connection can maintain data packet transmission to a maximum extent. Therefore, a network throughput is effectively increased and network resources are utilized to a maximum extent. In addition, if the last data packet is lost in a transmission process from the sending device to the receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

In some possible embodiments, that the network analyzer determines the window reduction amplitude of the congestion window of the first communication connection is not zero includes:

The network analyzer calculates, based on a second window reduction amplitude and a change of a third network throughput relative to a fourth network throughput, a first window reduction amplitude corresponding to the first communication connection. The second window reduction amplitude is a latest window reduction amplitude calculated by the network analyzer for the first communication connection before the network analyzer calculates the first window reduction amplitude. The third network throughput is a latest network throughput at which the transmission device performs communication through the first communication connection when the network analyzer calculates the first window reduction amplitude. The fourth network throughput is a latest network throughput at which the transmission device performs communication through the first communication connection when the network analyzer calculates the second window reduction amplitude.

If the change of the third network throughput relative to the fourth network throughput is an increase, and a change of the second window reduction amplitude relative to a previous window reduction amplitude that corresponds to the first communication connection and that is adjacent to the second window reduction amplitude is an increase, a change of the first window reduction amplitude that corresponds to the first communication connection and that is relative to the second window reduction amplitude is an increase.

If the change of the third network throughput relative to the fourth network throughput is an increase, and a change of the second window reduction amplitude relative to a previous window reduction amplitude that corresponds to the first communication connection and that is adjacent to the second window reduction amplitude is a decrease, a change of the first window reduction amplitude that corresponds to the first communication connection and that is relative to the second window reduction amplitude is a decrease.

If the change of the third network throughput relative to the fourth network throughput is a decrease, and a change of the second window reduction amplitude relative to a previous window reduction amplitude that corresponds to the first communication connection and that is adjacent to the second window reduction amplitude is an increase, a change of the first window reduction amplitude that corresponds to the first communication connection and that is relative to the second window reduction amplitude is a decrease.

If the change of the third network throughput relative to the fourth network throughput is a decrease, and a change of the second window reduction amplitude relative to a previous window reduction amplitude that corresponds to the first communication connection and that is adjacent to the second window reduction amplitude is a decrease, a change of the first window reduction amplitude that corresponds to the first communication connection and that is relative to the second window reduction amplitude is an increase.

It can be learned that, in this example, the network analyzer calculates, based on the second window reduction amplitude and the change of the third network throughput relative to the fourth network throughput, the first window reduction amplitude corresponding to the first communication connection. Because the first window reduction amplitude corresponding to the first communication connection is calculated based on the second window reduction amplitude and a change trend of the network throughput, and the congestion window of the first communication connection that is adjusted based on the first window reduction amplitude corresponding to the first communication connection can maintain data packet transmission to a maximum extent. Therefore, the network throughput is effectively increased, and network resources are utilized to a maximum extent.

In some possible embodiments, that the network analyzer determines the window reduction amplitude of the congestion window of the first communication connection is not zero includes:

The network analyzer calculates, based on a second window reduction amplitude and a change rate of a third network throughput relative to a fourth network throughput, a first window reduction amplitude corresponding to the first communication connection. The second window reduction amplitude is a latest window reduction amplitude calculated by the network analyzer for the first communication connection before the network analyzer calculates the first window reduction amplitude. The third network throughput is a latest network throughput at which the transmission device performs communication through the first communication connection when the network analyzer calculates the first window reduction amplitude. The fourth network throughput is a latest network throughput at which the transmission device performs communication through the first communication connection when the network analyzer calculates the second window reduction amplitude.

It can be learned that, in this example, the network analyzer calculates, based on the second window reduction amplitude and the change rate of the third network throughput relative to the fourth network throughput, the first window reduction amplitude corresponding to the first communication connection. Because the first window reduction amplitude corresponding to the first communication connection is calculated based on the second window reduction amplitude and the change rate of the third network throughput relative to the fourth network throughput, and the congestion window of the first communication connection that is adjusted based on the first window reduction amplitude corresponding to the first communication connection can maintain data packet transmission to a maximum extent. Therefore, the network throughput is effectively increased, and network resources are utilized to a maximum extent. In addition, the first window reduction amplitude corresponding to the first communication connection that is calculated based on the second window reduction amplitude and the change rate of the third network throughput relative to the fourth network throughput is more accurate.

In some possible embodiments, when calculating the window reduction amplitude at the $M^{th}$ time (M is an integer greater than or equal to 2), the network analyzer may specifically calculate the window reduction amplitude by using a formula for the first window reduction amplitude.

The formula for the first window reduction amplitude is as follows:

$$A_m = A_{m-1} \times [1 + \beta \times (Throughput_m - Throughput_{m-1})/Throughput_{m-1}]$$

$A_m$ is a window reduction amplitude (for example, the first window reduction amplitude) calculated for the first communication connection at the $M^{th}$ time, $A_{m-1}$ is a window reduction amplitude (for example, the second window reduction amplitude) calculated for the first communication connection at the $(M-1)^{th}$ time, $\beta$ is a preset window reduction amplitude coefficient, $Throughput_m$ is a latest network throughput (for example, the third network throughput) at which the transmission device performs communication through the first communication connection when the window reduction amplitude is calculated for the first communication connection at the $M^{th}$ time, and $Throughput_{m-1}$ is a latest network throughput (for example, the fourth network throughput) at which the transmission device performs communication through the first communication connection when the window reduction amplitude is calculated for the first communication connection at the $(M-1)^{th}$ time.

$\beta$ may be preset. In other words, a professional may manually set $\beta$ based on historical measurement data, and a value range of $\beta$ may be from -0.5 to 0.5.

Herein, an objective of introducing $[(Throughput_m - Throughput_{m-1})/Throughput_{m-1}]$ to refine $\beta$ lies in: when the network throughput changes greatly, an action amplitude of changing the window reduction amplitude may be larger; and when the network throughput changes slightly, an action amplitude of changing the window reduction amplitude may be smaller, so that a convergence value can be quickly reached. Reinforcement learning may change a time period for updating the window reduction amplitude. When the network throughput changes greatly, an iteration period is short. When the network throughput changes slightly, an iteration period is long. In this way, a network change can be quickly adapted to, and computing overheads can be reduced when a network status is stable.

In some possible embodiments, the following cases may exist.

If the window reduction amplitude is a window reduction amplitude calculated for the first communication connection at the first time, the window reduction amplitude is calculated by the network analyzer based on the minimum RTT of the transmission link on which the first communication connection is located.

Alternatively, if the window reduction amplitude is a window reduction amplitude calculated for the first communication connection at the second time, the window reduction amplitude is calculated by the network analyzer based on a preset window reduction amplitude coefficient and a window reduction amplitude calculated for the first communication connection at the first time.

Alternatively, if the window reduction amplitude is a window reduction amplitude calculated for the first communication connection at the $M^{th}$ time, the window reduction amplitude is calculated by the network analyzer based on a fifth network throughput, a sixth network throughput, and a window reduction amplitude calculated for the first communication connection at the $(M-1)^{th}$ time, where M is an integer greater than 2. The fifth network throughput is a latest network throughput at which the transmission device performs communication through the first communication connection when the window reduction amplitude is calculated for the first communication connection at the $M^{th}$ time. The sixth network throughput is a latest network throughput at which the transmission device performs communication through the first communication connection when the window reduction amplitude is calculated for the first communication connection at the $(M-1)^{th}$ time.

An English full name of RTT is Round Trip Time. RTT indicates a total time period elapsing from a time point when a sending device (for example, the transmission device) sends a data packet to a time point when the sending device receives an ACK from a receiving device (that is, the receiving device immediately sends the ACK corresponding to the data packet after the receiving device receives the data packet).

The network analyzer obtains a pre-stored mapping relationship between an RTT and a window reduction amplitude. The network analyzer obtains, based on the mapping relationship between the RTT and the window reduction amplitude, the window reduction amplitude corresponding to the minimum RTT of the transmission link on which the first communication connection is located. The network analyzer determines the window reduction amplitude corresponding to the minimum RTT of the transmission link on which the first communication connection is located as the window reduction amplitude calculated for the first communication connection at the first time.

The mapping relationship between the RTT and the window reduction amplitude may be determined by a professional based on historical measurement data. The mapping relationship between the RTT and the window reduction amplitude is shown in the following Table 1:

**Table 1**

| RTT | Window reduction amplitude |
|---|---|
| First RTT | First window reduction amplitude |
| Second RTT | Second window reduction amplitude |
| Third RTT | Third window reduction amplitude |
| ... | ... |

The RTT is in a one-to-one correspondence with the window reduction amplitude. If the RTT is the first RTT, the window reduction amplitude is the first window reduction amplitude. If the RTT is the second RTT, the window reduction amplitude is the second window reduction amplitude. If the RTT is the third RTT, the window reduction amplitude is the third window reduction amplitude. The RTT is positively correlated with the window reduction amplitude. In other words, a larger RTT indicates a larger window reduction amplitude.

The network analyzer calculates, by using a formula for the second window reduction amplitude, the window reduction amplitude calculated for the first communication connection at the second time.

The formula for the second window reduction amplitude is as follows:

$$A_2 = A_1 \times (1+\beta)$$

$A_2$ is the window reduction amplitude calculated for the first communication connection at the second time, $A_1$ is the window reduction amplitude calculated for the first communication connection at the first time, $\beta$ is a preset window reduction amplitude coefficient, and $\beta$ may be preset. In other words, a professional may manually set $\beta$ based on historical measurement data, and a value range of $\beta$ may be from -0.5 to 0.5.

For that the network analyzer calculates, based on the fifth network throughput, the sixth network throughput, and the window reduction amplitude calculated for the first communication connection at the $(M-1)^{th}$ time, the window reduction amplitude calculated for the first communication connection at the $M^{th}$ time, refer to that the network analyzer calculates, based on the second window reduction amplitude and the change rate of the third network throughput relative to the fourth network throughput, the first window reduction amplitude corresponding to the first communication connection. Details are not described herein again.

Optionally, when the transmission device reports the network throughput to the network analyzer according to the preset learning period length, if the window reduction amplitude is the window reduction amplitude calculated for the first communication connection at the $M^{th}$ time, the first window reduction amplitude is calculated by the network analyzer based on an eleventh network throughput, a twelfth network throughput, and the window reduction amplitude calculated for the first communication connection at the $(M-1)^{th}$ time, where M is an integer greater than 2. The eleventh network throughput is a latest network throughput that is reported by the transmission device in a learning period corresponding to the window reduction amplitude calculated for the first communication connection at the $M^{th}$ time, and at which the transmission device performs communication through the first communication connection when the window reduction amplitude is calculated for the first communication connection at the $M^{th}$ time. The twelfth network throughput is a latest network throughput that is reported by the transmission device in a learning period corresponding to the window reduction amplitude calculated for the first communication connection at the $(M-1)^{th}$ time, and at which the transmission device performs communication through the first communication connection when the window reduction amplitude is calculated for the first communication connection at the $(M-1)^{th}$ time.

It can be learned that, in this example, different window reduction amplitude calculation manners are used for window reduction amplitudes calculated for the first communication connection at different times, and then the window reduction amplitude of the congestion window of the first communication connection is sent to the transmission device. The transmission device adjusts the congestion window of the first communication connection based on the window reduction amplitude of the congestion window of the first communication connection, and the transmission device retransmits the second data packet by using the congestion window of the transmission device. The adjusted congestion window of the first communication connection can maintain data packet transmission to a maximum extent. Therefore, a network throughput is effectively increased, and network resources are utilized to a maximum extent. In addition, if the last data packet is lost in a transmission process from the sending device to the receiving device, the receiving device cannot receive the last data packet and the receiving device does not send an ACK corresponding to the last data packet to the sending device, causing a tail packet loss problem. In comparison, the transmission device retransmits the last data packet without receiving the ACK corresponding to the last data packet, and therefore, this helps resolve the tail packet loss problem.

131: The network analyzer sends the window reduction amplitude to the transmission device.

The window reduction amplitude may be sent to the transmission device by using the first interaction interface of the network analyzer.

If the packet loss type of the second data packet is the random packet loss, the window reduction amplitude sent by the network analyzer to the transmission device is zero, or the network analyzer does not send the window reduction amplitude to the transmission device.

It can be learned that, in this example, the network analyzer sends the window reduction amplitude to the transmission device which then adjusts the congestion window of the first communication connection based on the window reduction amplitude, and the transmission device retransmits the second data packet by using the congestion window of the transmission device. The first RTO is calculated based on a network throughput and can satisfy a real-time transmission status of a data packet. Therefore, this helps improve efficiency of retransmitting a lost data packet. The adjusted congestion window of the first communication connection can maintain data packet transmission to a maximum extent. Therefore, a network throughput is effectively increased, and network resources are utilized to a maximum extent. In addition, when the packet loss type of the second data packet is the random packet loss, the window reduction amplitude is zero. Therefore, invalid window reduction caused by random packet loss can be effectively avoided.

132: The transmission device receives the window reduction amplitude sent by the network analyzer.

The window reduction amplitude sent by the network analyzer may be received by using the second interaction interface of the transmission device.

133: The transmission device adjusts the congestion window of the first communication connection based on the window reduction amplitude.

The congestion window of the first communication connection may be adjusted based on the window reduction amplitude by using the congestion window module of the transmission device.

Optionally, the transmission device obtains a preset window increment function, and the transmission device adjusts the congestion window of the first communication connection based on the window reduction amplitude and the preset window increment function.

The preset window increment function may be pre-stored in the transmission device. Alternatively, the preset window increment function may be pre-stored in the network analyzer. A moment at which the network analyzer sends the preset increment window function to the transmission device may be in a process in which the network analyzer sends, to the transmission device, the RTO calculated for the first communication connection at the first time.

The preset window increment function may be preset. In other words, a professional may manually set the preset window increment function based on historical measurement data, and the preset window increment function may be a Cubic window increment function.

134: The transmission device retransmits the second data packet by using the congestion window of the transmission device.

The congestion window of the transmission device is the adjusted congestion window of the first communication connection.

It can be learned that a sending device immediately retransmits a next data packet when the sending device does not receive, within a specified RTO, an ACK that corresponds to the next data packet and that is sent by the receiving device. In comparison, in this embodiment of this application, the network analyzer calculates, based on the first network throughput at which the transmission device performs communication through the first communication connection, the first RTO corresponding to the first communication connection, and sends the first RTO to the transmission device. The transmission device determines, based on the first RTO sent by the network analyzer, that the second data packet transmitted through the first communication connection is lost, and sends the round trip time RTT of the first data packet and the packet loss information of the second data packet to the network analyzer. The network analyzer determines the packet loss type of the second data packet based on the RTT of the first data packet and the first RTO, determines the packet loss type of the second data packet based on the RTT of the first data packet and the first RTO, and sends the window reduction amplitude to the transmission device. The transmission device adjusts the congestion window of the first communication connection based on the window reductio n amplitude and retransmits the second data packet by using the congestion window of the transmission device. The first RTO is calculated based on a network throughput and can satisfy a real-time transmission status of a data packet. Therefore, this helps improve efficiency of retransmitting a lost data packet. The adjusted congestion window of the first communication connection can maintain data packet transmission to a maximum extent. Therefore, a network throughput is effectively increased, and network resources are utilized to a maximum extent. In addition, if the last data packet is lost in a transmission process from the sending device to the receiving device, the receiving device cannot receive the last data packet, and the receiving device does not send an ACK corresponding to the last data packet to a terminal, causing a tail packet loss problem. In comparison, the transmission device retransmits the last data packet without receiving the ACK corresponding to the last data packet, and therefore, this helps resolve the tail packet loss problem.

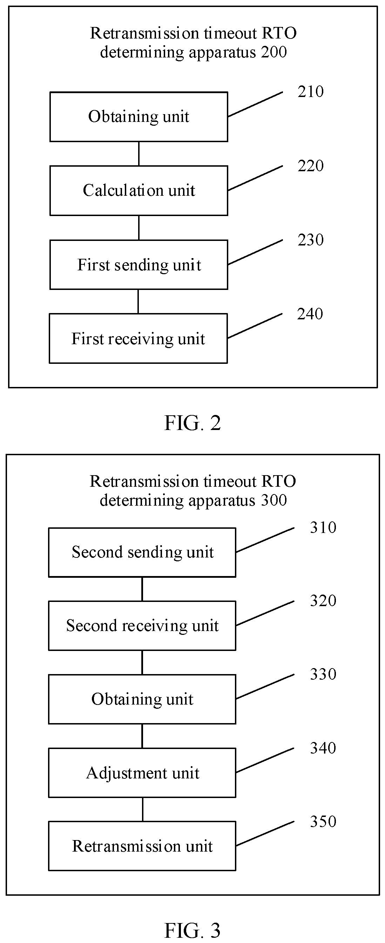

FIG. 2 is a composition block diagram of function units of a retransmission timeout RTO determining apparatus according to an embodiment of this application. The retransmission timeout RTO determining apparatus is used in a network analyzer. The retransmission timeout RTO determining apparatus 200 includes an obtaining unit 210, a calculation unit 220, and a first sending unit 230.

The obtaining unit 210 is configured to obtain a first network throughput at which a transmission device performs communication through a first communication connection.

The calculation unit 220 is configured to calculate, based on the first network throughput, a first RTO corresponding to the first communication connection.

The first sending unit 230 is configured to send the first RTO to the transmission device.

In some possible embodiments, the retransmission timeout RTO determining apparatus 200 further includes a first receiving unit 240.

The first receiving unit 240 is configured to receive a round trip time RTT of a first data packet and packet loss information of a second data packet that are sent by the transmission device. Both the first data packet and the second data packet are data packets transmitted by the transmission device through the first communication connection. A time point at which the transmission device transmits the first data packet is earlier than a time point at which the transmission device transmits the second data packet. The second data packet is a lost data packet that is determined based on the first RTO.

The obtaining unit 210 is further configured to determine a packet loss type of the second data packet based on the RTT of the first data packet and the first RTO, where the packet loss type includes congestion-triggered packet loss and random packet loss.

The obtaining unit 210 is further configured to determine a window reduction amplitude of a congestion window of the first communication connection based on the packet loss type of the second data packet.

In some possible embodiments, the first data packet and the second data packet are two data packets successively sent by the transmission device through the first communication connection.

In some possible embodiments,
the first sending unit 230 is further configured to send the window reduction amplitude to the transmission device.

In some possible embodiments, in an aspect of calculating, based on the first network throughput, the first RTO corresponding to the first communication connection, the calculation unit 220 is specifically configured to:
based on the first network throughput, a second RTO, and a second network throughput, calculate the first RTO corresponding to the first communication connection, where the second RTO is a latest RTO calculated by the network analyzer for the first communication connection before the network analyzer calculates the first RTO, and the second network throughput is a latest network throughput at which the transmission device performs communication through the first communication connection when the network analyzer calculates the second RTO.

In some possible embodiments, in an aspect of calculating, based on the first network throughput, the second RTO, and the second network throughput, the first RTO corresponding to the first communication connection, the calculation unit 220 is specifically configured to:
based on the second RTO and a change rate of the first network throughput relative to the second network throughput, calculate the first RTO corresponding to the first communication connection.

In some possible embodiments, the first RTO is an RTO calculated for the first communication connection at the $N^{th}$ time, the second RTO is an RTO calculated for the first communication connection at the $(N-1)^{th}$ time, and in an aspect of calculating, based on the first network throughput, the second RTO, and the second network throughput, the first RTO corresponding to the first communication connection, the calculation unit 220 is specifically configured to:
by using a formula for the first retransmission timeout, calculate the first RTO corresponding to the first communication connection.

The formula for the first retransmission timeout is as follows:

$$RTO_n = RTO_{n-1} \times [1 + \alpha \times (Throughput_n - Throughput_{n-1})/Throughput_{n-1}]$$

$RTO_n$ is the first RTO, $RTO_{n-1}$ is the second RTO, $\alpha$ is a preset RTO coefficient, Throughput. is the first network throughput, and $Throughput_{n-1}$ is the second network throughput.

In some possible embodiments, in an aspect of determining a packet loss type of the second data packet based on the RTT of the first data packet and the first RTO, the obtaining unit 210 is specifically configured to:

calculate a duration difference between the first RTO and the RTT of the first data packet; and
if the duration difference is greater than or equal to preset duration, determine that the packet loss type of the second data packet is the congestion-triggered packet loss; or
if the duration difference is less than preset duration, determine that the packet loss type of the second data packet is the random packet loss.

In some possible embodiments, in an aspect of determining the window reduction amplitude of the congestion window of the first communication connection based on the packet loss type of the second data packet, the obtaining unit 210 is specifically configured to:

if the packet loss type of the second data packet is the congestion-triggered packet loss, determine that the window reduction amplitude of the congestion window of the first communication connection is not zero; or
if the packet loss type of the second data packet is the random packet loss, determine that the window reduction amplitude of the congestion window of the first communication connection is zero.

In some possible embodiments, in an aspect of determining that the window reduction amplitude of the congestion window of the first communication connection is not zero, the obtaining unit 210 is specifically configured to: based on a second window reduction amplitude and a change rate of a third network throughput relative to a fourth network throughput, calculate a first window reduction amplitude corresponding to the first communication connection, where the second window reduction amplitude is a latest window reduction amplitude calculated by the network analyzer for the first communication connection before the network analyzer calculates the first window reduction amplitude, the third network throughput is a latest network throughput at which the transmission device performs communication through the first communication connection when the network analyzer calculates the first window reduction amplitude, and the fourth network throughput is a latest network throughput at which the transmission device performs communication through the first communication connection when the network analyzer calculates the second window reduction amplitude.

In some possible embodiments, the first window reduction amplitude is a window reduction amplitude calculated for the first communication connection at the $M^{th}$ time, the second window reduction amplitude is a window reduction amplitude calculated for the first communication connection at the $(M-1)^{th}$ time, and in an aspect of calculating, based on the third network throughput, the second window reduction amplitude, and the fourth network throughput, the first window reduction amplitude corresponding to the first communication connection, the obtaining unit 210 is specifically configured to:
by using a formula for the first window reduction amplitude, calculate the first window reduction amplitude corresponding to the first communication connection.
The formula for the first window reduction amplitude is as follows:

$$A_m = A_{m-1} \times [1 + \beta \times (\mathrm{Throughput}_m - \mathrm{Throughput}_{m-1}) / \mathrm{Throughput}_{m-1}]$$

$A_m$ is the first window reduction amplitude, $A_{m-1}$ is the second window reduction amplitude, $\beta$ is a preset window reduction amplitude coefficient, $\mathrm{Throughput}_m$ is the third network throughput, and $\mathrm{Throughput}_{m-1}$ is the fourth network throughput.
In some possible embodiments, the following cases may exist.
If the window reduction amplitude is a window reduction amplitude calculated for the first communication connection at the first time, the window reduction amplitude is calculated by the network analyzer based on a minimum RTT of a transmission link on which the first communication connection is located.
Alternatively, if the window reduction amplitude is a window reduction amplitude calculated for the first communication connection at the second time, the window reduction amplitude is calculated by the network analyzer based on a preset window reduction amplitude coefficient and a window reduction amplitude calculated for the first communication connection at the first time.
Alternatively, if the window reduction amplitude is a window reduction amplitude calculated for the first communication connection at the $M^{th}$ time, the window reduction amplitude is calculated by the network analyzer based on a fifth network throughput, a sixth network throughput, and a window reduction amplitude calculated for the first communication connection at the $(M-1)^{th}$ time, where M is an integer greater than 2. The fifth network throughput is a latest network throughput at which the transmission device performs communication through the first communication connection when the window reduction amplitude is calculated for the first communication connection at the $M^{th}$ time. The sixth network throughput is a latest network throughput at which the transmission device performs communication through the first communication connection when the window reduction amplitude is calculated for the first communication connection at the (M-1)$^{th}$ time.

In some possible embodiments,

the first sending unit 230 is further configured to send a network throughput request to the transmission device, where the network throughput request is used to indicate the transmission device to report a network throughput to the network analyzer according to a preset learning period length.

FIG. 3 is a composition block diagram of function units of another retransmission timeout RTO determining apparatus according to an embodiment of this application. The retransmission timeout RTO determining apparatus is used in a transmission device. The retransmission timeout RTO determining apparatus 300 includes a second sending unit 310, a second receiving unit 320.

The second sending unit 310 is configured to send, to a network analyzer, a network throughput at which communication is performed through a first communication connection, where the network throughput is used by the network analyzer to determine an RTO corresponding to the first communication connection.

The second receiving unit 320 is configured to receive the RTO sent by the network analyzer.

In some possible embodiments, the retransmission timeout RTO determining apparatus 300 further includes an obtaining unit 330.

The obtaining unit 330 is configured to determine, based on the RTO, that a second data packet transmitted through the first communication connection is lost.

The second sending unit 310 is configured to send a round trip time RTT of a first data packet and packet loss information of a second data packet to the network analyzer. Both the first data packet and the second data packet are data packets transmitted by the transmission device through the first communication connection. A time point at which the transmission device transmits the first data packet is earlier than a time point at which the transmission device transmits and forwards the second data packet. The RTT and the packet loss information are used by the network analyzer to determine a window reduction amplitude of a congestion window of the first communication connection.

In some possible embodiments, the retransmission timeout RTO determining apparatus 300 further includes an adjustment unit 340.

The second receiving unit 320 is further configured to receive the window reduction amplitude sent by the network analyzer.

The adjustment unit 340 is configured to adjust the congestion window of the first communication connection based on the window reduction amplitude.

In some possible embodiments, the retransmission timeout RTO determining apparatus 300 further includes a retransmission unit 350.

The retransmission unit 350 is configured to retransmit the second data packet by using the congestion window of the transmission device.

In some possible embodiments,

the second receiving unit 320 is further configured to receive a network throughput request sent by the network analyzer, where the network throughput request is used to indicate the transmission device to report a network throughput to the network analyzer according to a preset learning period length.

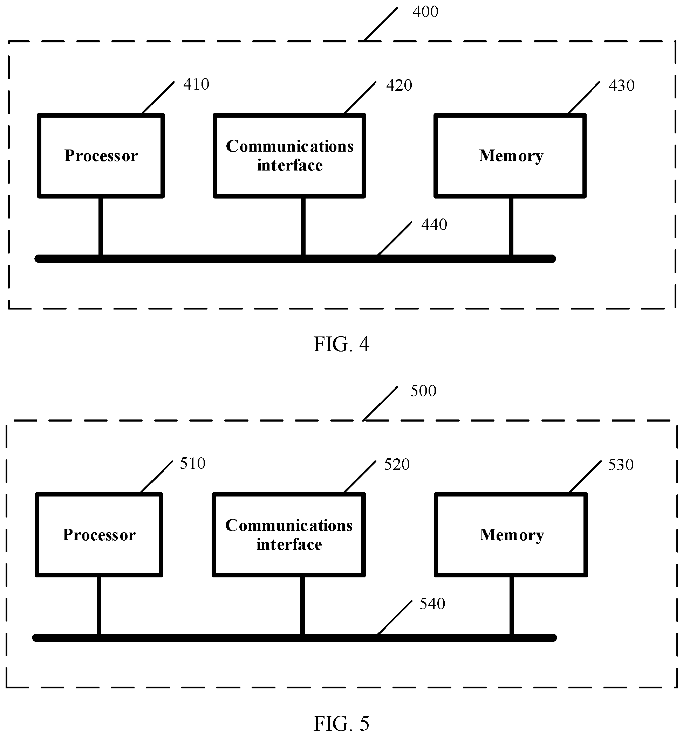

FIG. 4 shows a retransmission timeout RTO determining apparatus according to an embodiment of this application. The retransmission timeout RTO determining apparatus 400 includes a processor 410, a communications interface 420, and a memory 430 that are coupled to each other. For example, the memory 430, the communications interface 420, and the processor 410 are coupled by using a bus 440.

The memory 430 may include but is not limited to a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory 430 is configured to store related instructions and data.

The processor 410 may be one or more central processing units (Central Processing Units, CPUs). When the processor 410 is one CPU, the CPU may be a single-core CPU, or may be a multi-core CPU.

The processor 410 is configured to: read program code stored in the memory 430, and cooperate with the communications interface 420 to perform some or all steps of the method that is performed by the retransmission timeout RTO determining apparatus 400 and that is provided in the foregoing embodiments of this application.

The processor 410 is configured to obtain a first network throughput at which a transmission device performs communication through a first communication connection.

The processor 410 is further configured to calculate, based on the first network throughput, a first RTO corresponding to the first communication connection.

The communications interface 420 is configured to send the first RTO to the transmission device.

In some possible embodiments,

the communications interface 420 is further configured to receive a round trip time RTT of a first data packet and packet loss information of a second data packet that are sent by the transmission device. Both the first data packet and the second data packet are data packets transmitted by the transmission device through the first communication connection. A time point at which the transmission device transmits the first data packet is earlier than a time point at which the transmission device transmits the second data packet. The second data packet is a lost data packet that is determined based on the first RTO.

The processor 410 is further configured to determine a packet loss type of the second data packet based on the RTT of the first data packet and the first RTO, where the packet loss type includes congestion-triggered packet loss and random packet loss.

The processor 410 is further configured to determine a window reduction amplitude of a congestion window of the first communication connection based on the packet loss type of the second data packet.

In some possible embodiments, the first data packet and the second data packet are two data packets successively sent by the transmission device through the first communication connection.

In some possible embodiments,
the communications interface 420 is further configured to send a window reduction amplitude to the transmission device.

In some possible embodiments, in an aspect of calculating, based on the first network throughput, the first RTO corresponding to the first communication connection, the processor 410 is specifically configured to:
based on the first network throughput, a second RTO, and a second network throughput, calculate the first RTO corresponding to the first communication connection, where the second RTO is a latest RTO calculated by a network analyzer for the first communication connection before the network analyzer calculates the first RTO, and the second network throughput is a latest network throughput at which the transmission device performs communication through the first communication connection when the network analyzer calculates the second RTO.

In some possible embodiments, in an aspect of calculating, based on the first network throughput, the second RTO, and the second network throughput, the first RTO corresponding to the first communication connection, the processor 410 is specifically configured to:
based on the second RTO and a change rate of the first network throughput relative to the second network throughput, calculate the first RTO corresponding to the first communication connection.

In some possible embodiments, the first RTO is an RTO calculated for the first communication connection at the $N^{th}$ time, the second RTO is an RTO calculated for the first communication connection at the $(N-1)^{th}$ time, and in an aspect of calculating, based on the first network throughput, the second RTO, and the second network throughput, the first RTO corresponding to the first communication connection, the processor 410 is specifically configured to:
by using a formula for the first retransmission timeout, calculate the first RTO corresponding to the first communication connection.

The formula for the first retransmission timeout is as follows:

$$RTO_n = RTO_{n-1} \times [1 + \alpha \times (Throughput_n - Throughput_{n-1})/Throughput_{n-1}]$$

$RTO_n$ is the first RTO, $RTO_{n-1}$ is the second RTO, $\alpha$ is a preset RTO coefficient, Throughput. is the first network throughput, and $Throughput_{n-1}$ is the second network throughput.

In some possible embodiments, in an aspect of determining a packet loss type of the second data packet based on the RTT of the first data packet and the first RTO, the processor 410 is specifically configured to:

calculate a duration difference between the first RTO and the RTT of the first data packet; and
if the duration difference is greater than or equal to preset duration, determine that the packet loss type of the second data packet is the congestion-triggered packet loss; or
if the duration difference is less than preset duration, determine that the packet loss type of the second data packet is the random packet loss.

In some possible embodiments, in an aspect of determining the window reduction amplitude of the congestion window of the first communication connection based on the packet loss type of the second data packet, the processor 410 is specifically configured to:

if the packet loss type of the second data packet is the congestion-triggered packet loss, determine that the window reduction amplitude of the congestion window of the first communication connection is not zero; or
if the packet loss type of the second data packet is the random packet loss, determine that the window reduction amplitude of the congestion window of the first communication connection is zero.

In some possible embodiments, in an aspect of determining that the window reduction amplitude of the congestion window of the first communication connection is not zero, the processor 410 is specifically configured to:
based on a second window reduction amplitude and a change rate of a third network throughput relative to a fourth network throughput, calculate a first window reduction amplitude corresponding to the first communication connection, where the second window reduction amplitude is a latest window reduction amplitude calculated by the network analyzer for the first communication connection before the network analyzer calculates the first window reduction amplitude, the third network throughput is a latest network throughput at which the transmission device performs communication through the first communication connection when the network analyzer calculates the first window reduction amplitude, and the fourth network throughput is a latest network throughput at which the transmission device performs communication through the first communication connection when the network analyzer calculates the second window reduction amplitude.

In some possible embodiments, the first window reduction amplitude is a window reduction amplitude calculated for the first communication connection at the $M^{th}$ time, the second window reduction amplitude is a window reduction amplitude calculated for the first communication connection at the $(M-1)^{th}$ time, and in an aspect of calculating, based on the third network throughput, the second window reduction amplitude, and the fourth network throughput, the first window reduction amplitude corresponding to the first communication connection, the processor 410 is specifically configured to:
by using a formula for the first window reduction amplitude, calculate the first window reduction amplitude corresponding to the first communication connection.

The formula for the first window reduction amplitude is as follows:

$$A_m = A_{m-1} \times [1 + \beta \times (\mathrm{Throughput}_m - \mathrm{Throughput}_{m-1})/\mathrm{Throughput}_{m-1}]$$

$A_m$ is the first window reduction amplitude, $A_{m-1}$ is the second window reduction amplitude, $\beta$ is a preset window reduction amplitude coefficient, $\mathrm{Throughput}_m$ is the third network throughput, and $\mathrm{Throughput}_{m-1}$ is the fourth network throughput.

In some possible embodiments, the following cases may exist.

If the window reduction amplitude is a window reduction amplitude calculated for the first communication connection at the first time, the window reduction amplitude is calculated by the network analyzer based on a minimum RTT of a transmission link on which the first communication connection is located.

Alternatively, if the window reduction amplitude is a window reduction amplitude calculated for the first communication connection at the second time, the window reduction amplitude is calculated by the network analyzer based on a preset window reduction amplitude coefficient and a window reduction amplitude calculated for the first communication connection at the first time.

Alternatively, if the window reduction amplitude is a window reduction amplitude calculated for the first communication connection at the $M^{th}$ time, the window reduction amplitude is calculated by the network analyzer based on a fifth network throughput, a sixth network throughput, and a window reduction amplitude calculated for the first communication connection at the $(M-1)^{th}$ time, where M is an integer greater than 2. The fifth network throughput is a latest network throughput at which the transmission device performs communication through the first communication connection when the window reduction amplitude is calculated for the first communication connection at the $M^{th}$ time. The sixth network throughput is a latest network throughput at which the transmission device performs communication through the first communication connection when the window reduction amplitude is calculated for the first communication connection at the $(M-1)^{th}$ time.

In some possible embodiments,
the communications interface 420 is further configured to send a network throughput request to the transmission device, where the network throughput request is used to indicate the transmission device to report a network throughput to the network analyzer according to a preset learning period length.

FIG. 5 shows another retransmission timeout RTO determining apparatus according to an embodiment of this application. The retransmission timeout RTO determining apparatus 500 includes a processor 510, a communications interface 520, and a memory 530 that are coupled to each other. For example, the memory 530, the communications interface 520, and the processor 510 are coupled by using a bus 540.

The memory 530 may include but is not limited to a random access memory (Random Access Memory, RAM), an erasable programmable read-only memory (Erasable Programmable ROM, EPROM), a read-only memory (Read-Only Memory, ROM), a portable read-only memory (Compact Disc Read-Only Memory, CD-ROM), or the like. The memory 530 is configured to store related instructions and data.

The processor 510 may be one or more central processing units (Central Processing Units, CPUs). When the processor 510 is a CPU, the CPU may be a single-core CPU or a multi-core CPU.

The processor 510 is configured to: read program code stored in the memory 530, and cooperate with the communications interface 520 to perform some or all steps of the method that is performed by the retransmission timeout RTO determining apparatus 500 and that is provided in the foregoing embodiments of this application.

The communications interface 520 is configured to send, to a network analyzer, a network throughput at which communication is performed through a first communication connection, where the network throughput is used by the network analyzer to determine an RTO corresponding to the first communication connection.

The communications interface 520 is further configured to receive the RTO sent by the network analyzer.

In some possible embodiments,
the processor 510 is configured to determine, based on the RTO, that a second data packet transmitted through the first communication connection is lost.

The communications interface 520 is further configured to send a round trip time RTT of a first data packet and packet loss information of the second data packet to the network analyzer. Both the first data packet and the second data packet are data packets transmitted by a transmission device through the first communication connection. A time point at which the transmission device transmits the first data packet is earlier than a time point at which the transmission device transmits the second data packet. The RTT and the packet loss information are used by the network analyzer to determine a window reduction amplitude of a congestion window of the first communication connection.

In some possible embodiments,
the communications interface 520 is further configured to receive the window reduction amplitude sent by the network analyzer.

The processor 510 is further configured to adjust the congestion window of the first communication connection based on the window reduction amplitude.

In some possible embodiments,
the communications interface 520 is further configured to retransmit the second data packet by using the congestion window of the transmission device.

In some possible embodiments,
the communications interface 520 is further configured to receive a network throughput request sent by the network analyzer, where the network throughput request is used to indicate the transmission device to report a network throughput to the network analyzer according to a preset learning period length.

An embodiment of this application further provides a computer-readable storage medium that stores computer instructions. A computer program is executed by hardware (for example, a processor), to implement some or all steps of any method that is performed by a retransmission timeout RTO determining apparatus and that is provided in embodiments of this application.

An embodiment of this application further provides a computer program product. When the computer program product runs on a computer or a processor, the computer or the processor is enabled to perform some or all steps of the retransmission timeout RTO determining method in the foregoing aspects.

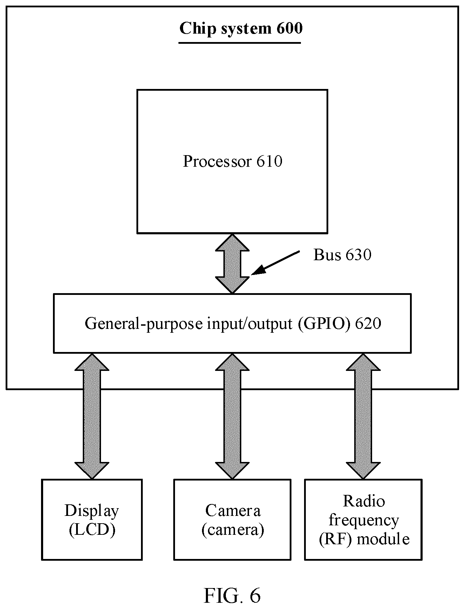

FIG. 6 is a schematic diagram of a structure of a chip system according to an embodiment of this application. The chip system 600 may include a processor 610 and one or more interfaces 620 coupled to the processor 610. An example is as follows:

The processor 610 may be configured to read and execute computer-readable instructions. During specific implementation, the processor 610 may mainly include a controller, an arithmetic unit, and a register. For example, the controller is mainly responsible for decoding instructions and sending a control signal for an operation corresponding to the instructions. The arithmetic unit is mainly responsible for performing a fixed-point or floatingpoint arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor 610 may be an application-specific integrated circuit (application-specific integrated circuit, ASIC) architecture, a microprocessor without interlocked piped stages (microprocessor without interlocked piped stages architecture, MIPS) architecture, an advanced reduced instruction set computer machine (advanced RISC machine, ARM) architecture, an NP architecture, or the like. The processor 610 may be a single-core or multi-core processor.

For example, the interface 620 may be configured to input to-be-processed data to the processor 610, and may output a processing result of the processor 610. During specific implementation, the interface 620 may be a general-purpose input/output (general-purpose input/output, GPIO) interface, and may be connected to a plurality of peripheral devices (for example, a display (LCD), a camera (camera), and a radio frequency (radio frequency, RF) module). The interface 620 is connected to the processor 610 by using the bus 630.

In some possible embodiments, the processor 610 may be configured to invoke, from a memory, a program or data for implementing, on a network device side or a terminal device side, the retransmission timeout RTO determining method and the method for retransmitting a lost data packet that are provided in one or more embodiments of this application, so that the chip can implement the retransmission timeout RTO determining method shown in FIG. 1A and the methods for retransmitting a lost data packet shown in FIG. 1B and FIG. 1C-1 and FIG. 1C-2. The memory may be integrated with the processor 610, or may be coupled to the chip system 600 through the interface 620. In other words, the memory may be a part of the chip system 600, or may be independent of the chip system 600. The interface 620 may be configured to output an execution result of the processor 610. In this application, the interface 620 may be specifically configured to output a decoding result of the processor 610. For the retransmission timeout RTO determining method and the method for retransmitting a lost data packet that are provided in one or more embodiments of this application, refer to the foregoing embodiments. Details are not described herein again.

In the foregoing embodiments, all or some of the functions may be implemented by using software, hardware, or a combination of software and hardware. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the embodiments may be implemented by a computer program instructing related hardware. The program may be stored in a computer-readable storage medium. When the program is executed, the procedures in the method embodiments may be included. The foregoing storage medium includes: any medium that can store program code, such as a ROM or a random access memory RAM, a magnetic disk, or an optical disc.

**Claims**

1. A retransmission timeout RTO determining method, applied to a network analyzer, wherein the method comprises:

   obtaining, by the network analyzer, a first network throughput at which a transmission device performs communication through a first communication connection;
   calculating, by the network analyzer based on the first network throughput, a first RTO corresponding to the first communication connection; and
   sending, by the network analyzer, the first RTO to the transmission device.

2. The method according to claim 1, wherein after the sending, by the network analyzer, the first RTO to the transmission device, the method further comprises:

   receiving, by the network analyzer, a round trip time RTT of a first data packet and packet loss information of a second data packet that are sent by the transmission device, wherein both the first data packet and the second data packet are data packets transmitted by the transmission device through the first communication connection, a time point at which the transmission device transmits the first data packet is earlier than a time point at which the transmission device transmits the second data packet, and the second data packet is a lost data packet that is determined based on the first RTO;
   determining, by the network analyzer, a packet loss type of the second data packet based on the RTT of the first data packet and the first RTO, wherein the packet loss type comprises congestion-triggered packet loss and random packet loss; and
   determining, by the network analyzer, a window reduction amplitude of a congestion window of the first communication connection based on the packet loss type of the second data packet.

3. The method according to claim 2, wherein the first data packet and the second data packet are two data packets successively sent by the transmission device through the first communication connection.

4. The method according to claim 2 or 3, wherein after the determining, by the network analyzer, a window reduction amplitude of a congestion window of the first communication connection based on the packet loss type of the second data packet, the method further comprises:
   sending, by the network analyzer, the window reduction amplitude to the transmission device.

5. The method according to any one of claims 1 to 4, wherein the calculating, by the network analyzer based on the first network throughput, a first RTO corresponding to the first communication connection comprises:
calculating, by the network analyzer based on the first network throughput, a second RTO, and a second network throughput, the first RTO corresponding to the first communication connection, wherein the second RTO is a latest RTO calculated by the network analyzer for the first communication connection before the network analyzer calculates the first RTO, and the second network throughput is a latest network throughput at which the transmission device performs communication through the first communication connection when the network analyzer calculates the second RTO.

6. The method according to claim 5, wherein the calculating, by the network analyzer based on the first network throughput, a second RTO, and a second network throughput, the first RTO corresponding to the first communication connection comprises:
calculating, by the network analyzer based on the second RTO and a change rate of the first network throughput relative to the second network throughput, the first RTO corresponding to the first communication connection.

7. The method according to claim 5 or 6, wherein the first RTO is an RTO calculated for the first communication connection at the $N^{th}$ time, the second RTO is an RTO calculated for the first communication connection at the $(N-1)^{th}$ time, and the calculating, by the network analyzer based on the first network throughput, a second RTO, and a second network throughput, the first RTO corresponding to the first communication connection comprises:

calculating, by the network analyzer by using a formula for the first retransmission timeout, the first RTO corresponding to the first communication connection, wherein
the formula for the first retransmission timeout is as follows:

$$RTO_n = RTO_{n-1} \times [1 + \alpha \times (Throughput_n - Throughput_{n-1} - Throughput_{n-1})/Throughput_{n-1}],$$ wherein
$RTO_n$ is the first RTO, $RTO_{n-1}$ is the second RTO, $\alpha$ is a preset RTO coefficient, $Throughput_n$ is the first network throughput, and $Throughput_{n-1}$ is the second network throughput.

8. The method according to any one of claims 2 to 4, wherein the determining, by the network analyzer, a packet loss type of the second data packet based on the RTT of the first data packet and the first RTO comprises:

calculating, by the network analyzer, a duration difference between the first RTO and the RTT of the first data packet; and
if the duration difference is greater than or equal to preset duration, determining, by the network analyzer, that the packet loss type of the second data packet is the congestion-triggered packet loss; or
if the duration difference is less than preset duration, determining, by the network analyzer, that the packet loss type of the second data packet is the random packet loss.

9. The method according to any one of claims 2 to 4 or claim 8, wherein the determining, by the network analyzer, a window reduction amplitude of a congestion window of the first communication connection based on the packet loss type of the second data packet comprises:

if the packet loss type of the second data packet is the congestion-triggered packet loss, determining, by the network analyzer, that the window reduction amplitude of the congestion window of the first communication connection is not zero; or
if the packet loss type of the second data packet is the random packet loss, determining, by the network analyzer, that the window reduction amplitude of the congestion window of the first communication connection is zero.

10. The method according to claim 9, wherein the determining, by the network analyzer, that the window reduction amplitude of the congestion window of the first communication connection is not zero comprises:
calculating, by the network analyzer based on a second window reduction amplitude and a change rate of a third network throughput relative to a fourth network throughput, a first window reduction amplitude corresponding to the first communication connection, wherein the second window reduction amplitude is a latest window reduction amplitude calculated by the network analyzer for the first communication connection before the network analyzer calculates the first window reduction amplitude, the third network throughput is a latest network throughput at which the transmission device performs communication through the first communication connection when the network analyzer calculates the first window reduction amplitude, and the fourth network throughput is a latest network throughput at which the transmission device performs communication through the first communication connection when the network analyzer calculates the second window reduction amplitude.

**11.** The method according to claim 10, wherein the first window reduction amplitude is a window reduction amplitude calculated for the first communication connection at the $M^{th}$ time, the second window reduction amplitude is a window reduction amplitude calculated for the first communication connection at the $(M-1)^{th}$ time, and calculating, by the network analyzer based on the third network throughput, the second window reduction amplitude, and the fourth network throughput, the first window reduction amplitude corresponding to the first communication connection comprises:

calculating, by the network analyzer by using a formula for the first window reduction amplitude, the first window reduction amplitude corresponding to the first communication connection, wherein
the formula for the first window reduction amplitude is as follows:

$$A_m = A_{m-1} \times [1 + \beta \times (Throughput_m - Throughput_{m-1})/Throughput_{m-1}],$$

wherein
$A_m$ is the first window reduction amplitude, $A_{m-1}$ is the second window reduction amplitude, $\beta$ is a preset window reduction amplitude coefficient, $Throughput_m$ is the third network throughput, and $Throughput_{m-1}$ is the fourth network throughput.

**12.** The method according to any one of claims 2 to 4 or claim 8 or 9, wherein

if the window reduction amplitude is a window reduction amplitude calculated for the first communication connection at the first time, the window reduction amplitude is calculated by the network analyzer based on a minimum RTT of a transmission link on which the first communication connection is located; or
if the window reduction amplitude is a window reduction amplitude calculated for the first communication connection at the second time, the window reduction amplitude is calculated by the network analyzer based on a preset window reduction amplitude coefficient and a window reduction amplitude calculated for the first communication connection at the first time; or
if the window reduction amplitude is a window reduction amplitude calculated for the first communication connection at the $M^{th}$ time, the window reduction amplitude is calculated by the network analyzer based on a fifth network throughput, a sixth network throughput, and a window reduction amplitude calculated for the first communication connection at the $(M-1)^{th}$ time, wherein M is an integer greater than 2, the fifth network throughput is a latest network throughput at which the transmission device performs communication through the first communication connection when the window reduction amplitude is calculated for the first communication connection at the $M^{th}$ time, and the sixth network throughput is a latest network throughput at which the transmission device performs communication through the first communication connection when the window reduction amplitude is calculated for the first communication connection at the $(M-1)^{th}$ time.

**13.** The method according to any one of claims 1 to 12, wherein the method further comprises:
sending, by the network analyzer, a network throughput request to the transmission device, wherein the network throughput request is used to indicate the transmission device to report a network throughput to the network analyzer according to a preset learning period length.

**14.** A retransmission timeout RTO determining method, applied to a transmission device, wherein the method comprises:

sending, by the transmission device to a network analyzer, a network throughput at which communication is performed through a first communication connection, wherein the network throughput is used by the network analyzer to determine an RTO corresponding to the first communication connection; and
receiving, by the transmission device, the RTO sent by the network analyzer.

**15.** The method according to claim 14, wherein the method further comprises:

determining, by the transmission device based on the RTO, that a second data packet transmitted through the first communication connection is lost; and
sending, by the transmission device, a round trip time RTT of a first data packet and packet loss information of the second data packet to the network analyzer, wherein both the first data packet and the second data packet are data packets transmitted by the transmission device through the first communication connection, a time point at which the transmission device transmits the first data packet is earlier than a time point at which the transmission device transmits the second data packet, and the RTT and the packet loss information are used by the network analyzer to determine a window reduction amplitude of a congestion window of the first communication connection.

16. The method according to claim 15, wherein the method further comprises:

receiving, by the transmission device, the window reduction amplitude sent by the network analyzer; and adjusting, by the transmission device, the congestion window of the first communication connection based on the window reduction amplitude.

17. The method according to claim 15 or 16, wherein after the sending, by the transmission device, a round trip time RTT of a first data packet and packet loss information of the second data packet to the network analyzer, the method further comprises:
retransmitting, by the transmission device, the second data packet by using the congestion window of the transmission device.

18. The method according to any one of claims 14 to 17, wherein the method further comprises:
receiving, by the transmission device, a network throughput request sent by the network analyzer, wherein the network throughput request is used to indicate the transmission device to report a network throughput to the network analyzer according to a preset learning period length.

19. A retransmission timeout RTO determining apparatus, used in a network analyzer, wherein the apparatus comprises:

an obtaining unit, configured to obtain a first network throughput at which a transmission device performs communication through a first communication connection;
a calculation unit, configured to calculate, based on the first network throughput, a first RTO corresponding to the first communication connection; and
a first sending unit, configured to send the first RTO to the transmission device.

20. The apparatus according to claim 19, wherein the apparatus further comprises a first receiving unit, wherein

the first receiving unit is configured to receive a round trip time RTT of a first data packet and packet loss information of a second data packet that are sent by the transmission device, wherein both the first data packet and the second data packet are data packets transmitted by the transmission device through the first communication connection, a time point at which the transmission device transmits the first data packet is earlier than a time point at which the transmission device transmits the second data packet, and the second data packet is a lost data packet that is determined based on the first RTO;
the obtaining unit is further configured to determine a packet loss type of the second data packet based on the RTT of the first data packet and the first RTO, wherein the packet loss type comprises congestion-triggered packet loss and random packet loss; and
the obtaining unit is further configured to determine a window reduction amplitude of a congestion window of the first communication connection based on the packet loss type of the second data packet.

21. The apparatus according to claim 20, wherein the first data packet and the second data packet are two data packets successively sent by the transmission device through the first communication connection.

22. The apparatus according to claim 20 or 21, wherein
the first sending unit is further configured to send the window reduction amplitude to the transmission device.

23. The apparatus according to any one of claims 19 to 22, wherein in an aspect of calculating, based on the first network throughput, the first RTO corresponding to the first communication connection, the calculation unit is specifically configured to:
based on the first network throughput, a second RTO, and a second network throughput, calculate the first RTO corresponding to the first communication connection, wherein the second RTO is a latest RTO calculated by the network analyzer for the first communication connection before the network analyzer calculates the first RTO, and the second network throughput is a latest network throughput at which the transmission device performs communication through the first communication connection when the network analyzer calculates the second RTO.

24. The apparatus according to claim 23, wherein in an aspect of calculating, based on the first network throughput, the second RTO, and the second network throughput, the first RTO corresponding to the first communication connection, the calculation unit is specifically configured to:
based on the second RTO and a change rate of the first network throughput relative to the second network throughput, calculate the first RTO corresponding to the first communication connection.

25. The apparatus according to claim 23 or 24, wherein the first RTO is an RTO calculated for the first communication connection at the $N^{th}$ time, the second RTO is an RTO calculated for the first communication connection at the $(N-1)^{th}$ time, and in an aspect of calculating, based on the first network throughput, the second RTO, and the second network throughput, the first RTO corresponding to the first communication connection, the calculation unit is specifically configured to:

by using a formula for the first retransmission timeout, calculate the first RTO corresponding to the first communication connection, wherein
the formula for the first retransmission timeout is as follows:

$$RTO_n = RTO_{n-1} \times [1 + \alpha \times (Throughput_n - Throughput_{n-1})/Throughput_{n-1}],$$

wherein
$RTO_n$ is the first RTO, $RTO_{n-1}$ is the second RTO, $\alpha$ is a preset RTO coefficient, $Throughput_n$ is the first network throughput, and $Throughput_{n-1}$ is the second network throughput.

26. The apparatus according to any one of claims 20 to 22, wherein in an aspect of determining the packet loss type of the second data packet based on the RTT of the first data packet and the first RTO, the obtaining unit is specifically configured to:

calculate a duration difference between the first RTO and the RTT of the first data packet; and
if the duration difference is greater than or equal to preset duration, determine that the packet loss type of the second data packet is the congestion-triggered packet loss; or
if the duration difference is less than preset duration, determine that the packet loss type of the second data packet is the random packet loss.

27. The apparatus according to any one of claims 20 to 22 or claim 26, wherein in an aspect of determining the window reduction amplitude of the congestion window of the first communication connection based on the packet loss type of the second data packet, the obtaining unit is specifically configured to:

if the packet loss type of the second data packet is the congestion-triggered packet loss, determine that the window reduction amplitude of the congestion window of the first communication connection is not zero; or
if the packet loss type of the second data packet is the random packet loss, determine that the window reduction amplitude of the congestion window of the first communication connection is zero.

28. The apparatus according to claim 27, wherein in an aspect of determining that the window reduction amplitude of the congestion window of the first communication connection is not zero, the obtaining unit is specifically configured to:
based on a second window reduction amplitude and a change rate of a third network throughput relative to a fourth network throughput, calculate a first window reduction amplitude corresponding to the first communication connection, wherein the second window reduction amplitude is a latest window reduction amplitude calculated by the network analyzer for the first communication connection before the network analyzer calculates the first window reduction amplitude, the third network throughput is a latest network throughput at which the transmission device performs communication through the first communication connection when the network analyzer calculates the first window reduction amplitude, and the fourth network throughput is a latest network throughput at which the transmission device performs communication through the first communication connection when the network analyzer calculates the second window reduction amplitude.

29. The apparatus according to claim 28, wherein the first window reduction amplitude is a window reduction amplitude calculated for the first communication connection at the $M^{th}$ time, the second window reduction amplitude is a window reduction amplitude calculated for the first communication connection at the $(M-1)^{th}$ time, and in an aspect of calculating, based on the third network throughput, the second window reduction amplitude, and the fourth network throughput, the first window reduction amplitude corresponding to the first communication connection, the obtaining unit is specifically configured to:

by using a formula for the first window reduction amplitude, calculate the first window reduction amplitude corresponding to the first communication connection, wherein
the formula for the first window reduction amplitude is as follows:

$$A_m = A_{m-1} \times [1 + \beta \times (\text{Throughput}_m - \text{Throughput}_{m-1}) / \text{Throughput}_{m-1}],$$

wherein
$A_m$ is the first window reduction amplitude, $A_{m-1}$ is the second window reduction amplitude, $\beta$ is a preset window reduction amplitude coefficient, $\text{Throughput}_m$ is the third network throughput, and $\text{Throughput}_{m-1}$ is the fourth network throughput.

30. The apparatus according to any one of claims 20 to 22 or claim 26 or 27, wherein

if the window reduction amplitude is a window reduction amplitude calculated for the first communication connection at the first time, the window reduction amplitude is calculated by the network analyzer based on a minimum RTT of a transmission link on which the first communication connection is located; or
if the window reduction amplitude is a window reduction amplitude calculated for the first communication connection at the second time, the window reduction amplitude is calculated by the network analyzer based on a preset window reduction amplitude coefficient and a window reduction amplitude calculated for the first communication connection at the first time; or
if the window reduction amplitude is a window reduction amplitude calculated for the first communication connection at the $M^{th}$ time, the window reduction amplitude is calculated by the network analyzer based on a fifth network throughput, a sixth network throughput, and a window reduction amplitude calculated for the first communication connection at the $(M-1)^{th}$ time, wherein M is an integer greater than 2, the fifth network throughput is a latest network throughput at which the transmission device performs communication through the first communication connection when the window reduction amplitude is calculated for the first communication connection at the $M^{th}$ time, and the sixth network throughput is a latest network throughput at which the transmission device performs communication through the first communication connection when the window reduction amplitude is calculated for the first communication connection at the $(M-1)^{th}$ time.

31. The apparatus according to any one of claims 19 to 30, wherein
the first sending unit is further configured to send a network throughput request to the transmission device, wherein the network throughput request is used to indicate the transmission device to report a network throughput to the network analyzer according to a preset learning period length.

32. A retransmission timeout RTO determining apparatus, used in a transmission device, wherein the apparatus comprises:

a second sending unit, configured to send, to a network analyzer, a network throughput at which communication is performed through a first communication connection, wherein the network throughput is used by the network analyzer to determine an RTO corresponding to the first communication connection; and
a second receiving unit, configured to receive the RTO sent by the network analyzer.

33. The apparatus according to claim 32, wherein the apparatus further comprises an obtaining unit, wherein

the obtaining unit is configured to determine, based on the RTO, that a second data packet transmitted through the first communication connection is lost; and
the second sending unit is configured to send a round trip time RTT of a first data packet and packet loss information of the second data packet to the network analyzer, wherein both the first data packet and the second data packet are data packets transmitted by the transmission device through the first communication connection, a time point at which the transmission device transmits the first data packet is earlier than a time point at which the transmission device transmits the second data packet, and the RTT and the packet loss information are used by the network analyzer to determine a window reduction amplitude of a congestion window of the first communication connection.

34. The apparatus according to claim 33, wherein the apparatus further comprises an adjustment unit, wherein

the second receiving unit is further configured to receive the window reduction amplitude sent by the network analyzer; and

the adjustment unit is configured to adjust the congestion window of the first communication connection based on the window reduction amplitude.

35. The apparatus according to claim 33 or 34, wherein the apparatus further comprises the adjustment unit and a retransmission unit, wherein

the retransmission unit is configured to retransmit the second data packet by using the congestion window of the transmission device.

36. The apparatus according to any one of claims 32 to 35, wherein

the second receiving unit is further configured to receive a network throughput request sent by the network analyzer, wherein the network throughput request is used to indicate the transmission device to report a network throughput to the network analyzer according to a preset learning period length.

37. A retransmission timeout RTO determining apparatus, wherein the apparatus comprises a processor, a communications interface, and a memory that are coupled to each other, wherein

the processor is configured to obtain a first network throughput at which a transmission device performs communication through a first communication connection;

the processor is further configured to calculate, based on the first network throughput, a first RTO corresponding to the first communication connection; and

the communications interface is configured to send the first RTO to the transmission device.

38. A retransmission timeout RTO determining apparatus, wherein the apparatus comprises a processor, a communications interface, and a memory that are coupled to each other, wherein

the communications interface is configured to send, to a network analyzer, a network throughput at which communication is performed through a first communication connection, wherein the network throughput is used by the network analyzer to determine an RTO corresponding to the first communication connection; and

the communications interface is further configured to receive the RTO sent by the network analyzer.

39. A computer-readable storage medium, storing a computer program, wherein the computer program is executed by hardware to implement the method that is performed by a retransmission timeout RTO determining apparatus and that is provided in any one of claims 1 to 13, and the method that is performed by a retransmission timeout RTO determining apparatus and that is provided in any one of claims 14 to 18.

40. A chip system, wherein the chip system comprises a processor, configured to support a retransmission timeout RTO determining apparatus in implementing the method according to any one of claims 1 to 13 and the method according to any one of claims 14 to 18.

Network
analyzer

Transmission
device

101: Send a network throughput at which
communication is performed through a first
communication connection

102: Obtain a first network throughput at which
the transmission device performs communication
through the first communication connection

103: Calculate, based on the first network
throughput, a first RTO corresponding to the first
communication connection

104: Send the first RTO

105: Receive the first RTO sent by the
network analyzer

FIG. 1A

```
┌─────────────┐                                    ┌──────────────┐
│   Network   │                                    │ Transmission │
│  analyzer   │                                    │   device     │
└─────────────┘                                    └──────────────┘
```

111: Send a network throughput at which
communication is performed through a first
communication connection

112: Obtain a first network throughput at which the
transmission device performs communication through
the first communication connection

113: Calculate, based on the first network throughput,
a first RTO corresponding to the first communication
connection

114: Send the first RTO

115: Receive the first RTO sent by the
network analyzer

116: Determine, based on the first RTO,
that a second data packet transmitted
through the first communication
connection is lost

117: Send a round trip time RTT of a first
data packet and packet loss information of
the second data packet

118: Retransmit the second data packet
by using a congestion window of the
transmission device

FIG. 1B

34

```
┌─────────────┐                              ┌─────────────┐
│  Network    │                              │Transmission │
│  analyzer   │                              │  device     │
└──────┬──────┘                              └──────┬──────┘
       │                                            │
       │  121: Send a network throughput at which   │
       │  communication is performed through a first│
       │  ◄─────── communication connection ────────│
       │                                            │
┌──────┴──────────────────────────────────┐         │
│ 122: Obtain a first network throughput at│         │
│ which the transmission device performs   │         │
│ communication through the first          │         │
│ communication connection                 │         │
└──────┬──────────────────────────────────┘         │
       │                                            │
┌──────┴──────────────────────────────────┐         │
│ 123: Calculate, based on the first       │         │
│ network throughput, a first RTO          │         │
│ corresponding to the first               │         │
│ communication connection                 │         │
└──────┬──────────────────────────────────┘         │
       │                                            │
       │       124: Send the first RTO              │
       │ ──────────────────────────────────────────►│
       │                                            │
       │              ┌─────────────────────────────┴──┐
       │              │ 125: Receive the first RTO sent │
       │              │ by the network analyzer         │
       │              └─────────────────────────────┬──┘
       │                                            │
       │              ┌─────────────────────────────┴──┐
       │              │ 126: Determine, based on the    │
       │              │ first RTO, that a second data   │
       │              │ packet transmitted through the  │
       │              │ first communication connection  │
       │              │ is lost                         │
       │              └─────────────────────────────┬──┘
       │  127: Send a round trip time RTT of a first│
       │  data packet and packet loss information of│
       │  ◄──────── the second data packet ─────────│
       │                                            │
       ~                                            ~
      TO                                           TO
   FIG. 1C-2                                    FIG. 1C-2
```

FIG. 1C-1

35

CONT.
FROM
FIG. 1C-1

CONT.
FROM
FIG. 1C-1

128: Receive the RTT of the first data packet and
the packet loss information of the second data
packet that are sent by the transmission device

129: Determine a packet loss type of the second
data packet based on the RTT of the first data
packet and the first RTO

130: Determine a window reduction amplitude of a
congestion window of the first communication
connection based on the packet loss type of the
second data packet

131: Send the window reduction amplitude

132: Receive the window reduction
amplitude sent by the network analyzer

133: Adjust the congestion window of the
first communication connection based on
the window reduction amplitude

134: Retransmit the second data packet by
using the congestion window of the
transmission device

FIG. 1C-2

Network analyzer

Reinforcement learning RTO module

Packet loss classification module

Reinforcement learning window reduction module

First interaction interface

FIG. 1D

Transmission device

Network processor

Congestion window module

Timer

Second interaction interface

Network interface

FIG. 1E

Retransmission timeout RTO
determining apparatus 200

Obtaining unit — 210

Calculation unit — 220

First sending unit — 230

First receiving unit — 240

FIG. 2

Retransmission timeout RTO
determining apparatus 300

Second sending unit — 310

Second receiving unit — 320

Obtaining unit — 330

Adjustment unit — 340

Retransmission unit — 350

FIG. 3

400

| Processor | Communications interface | Memory |

410    420    430

440

FIG. 4

500

| Processor | Communications interface | Memory |

510    520    530

540

FIG. 5

**Chip system 600**

Processor 610

Bus 630

General-purpose input/output (GPIO) 620

Display
(LCD)

Camera
(camera)

Radio
frequency
(RF) module

FIG. 6

# EP 4 123 938 A1

<table>
<tr><td colspan="2">INTERNATIONAL SEARCH REPORT</td><td>International application No.</td></tr>
<tr><td colspan="2"></td><td>**PCT/CN2021/089098**</td></tr>
</table>

**A. CLASSIFICATION OF SUBJECT MATTER**

H04L 1/08(2006.01)i

According to International Patent Classification (IPC) or to both national classification and IPC

**B. FIELDS SEARCHED**

Minimum documentation searched (classification system followed by classification symbols)

H04L, H04W

Documentation searched other than minimum documentation to the extent that such documents are included in the fields searched

Electronic data base consulted during the international search (name of data base and, where practicable, search terms used)

CNABS, CNTXT, CNKI, VEN, USTXT, EPTXT, WOTXT, 3GPP: 重传时间, 重传定时, RTO, 计算, 确定, 吞吐量, retransmission timeout, calculat+, determin+, thoughput

**C. DOCUMENTS CONSIDERED TO BE RELEVANT**

| Category* | Citation of document, with indication, where appropriate, of the relevant passages | Relevant to claim No. |
|---|---|---|
| PX | CN 112398599 A (SAMSUNG ELECTRONICS CO., LTD.) 23 February 2021 (2021-02-23) claims 1-20 | 1-40 |
| X | CN 1551551 A (NEC CORPORATION) 01 December 2004 (2004-12-01) claim 1 and description page 11 line 6- page 17 line 20 | 1, 13-14, 18-19, 31-32, 36-40 |
| X | CN 108718226 A (TIANJIN UNIVERSITY) 30 October 2018 (2018-10-30) claim 1 | 1, 13-14, 18-19, 31-32, 36-40 |
| A | CN 106130693 A (ZHEJIANG UNIVERSITY OF TECHNOLOGY) 16 November 2016 (2016-11-16) entire document | 1-40 |
| A | US 2015271042 A1 (FUJI XEROX CO., LTD.) 24 September 2015 (2015-09-24) entire document | 1-40 |
| PX | CN 112398599 A (SAMSUNG ELECTRONICS CO., LTD.) 23 February 2021 (2021-02-23) claims 1-20 | 1-40 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **16 June 2021** | **09 July 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/089098**

| Patent document cited in search report | | | Publication date (day/month/year) | Patent family member(s) | | | Publication date (day/month/year) |
|---|---|---|---|---|---|---|---|
| CN | 112398599 | A | 23 February 2021 | KR | 2021019307 | | 22 February 2021 |
| CN | 1551551 | A | 01 December 2004 | KR | 20040074625 | A | 25 August 2004 |
| | | | | HK | 1070208 | A1 | 10 June 2005 |
| | | | | KR | 100734497 | B1 | 03 July 2007 |
| | | | | JP | 4214793 | B2 | 28 January 2009 |
| | | | | EP | 1450521 | A2 | 25 August 2004 |
| | | | | US | 2004165543 | A1 | 26 August 2004 |
| | | | | JP | 2004253934 | A | 09 September 2004 |
| | | | | EP | 1450521 | A3 | 05 January 2011 |
| | | | | US | 7417956 | B2 | 26 August 2008 |
| | | | | CN | 1311655 | C | 18 April 2007 |
| CN | 108718226 | A | 30 October 2018 | CN | 108718226 | B | 11 December 2020 |
| CN | 106130693 | A | 16 November 2016 | CN | 106130693 | B | 23 April 2019 |
| US | 2015271042 | A1 | 24 September 2015 | JP | 2014165809 | A | 08 September 2014 |
| | | | | SG | 11201505523 R | A | 28 August 2015 |
| | | | | AU | 2013379989 | B2 | 31 March 2016 |
| | | | | US | 9654364 | B2 | 16 May 2017 |
| | | | | WO | 2014132471 | A1 | 04 September 2014 |
| | | | | AU | 2013379989 | A1 | 23 July 2015 |
| | | | | JP | 6051939 | B2 | 27 December 2016 |

Form PCT/ISA/210 (patent family annex) (January 2015)

**REFERENCES CITED IN THE DESCRIPTION**

**Patent documents cited in the description**

• CN 202010328700